# EUROPEAN PATENT APPLICATION

(11) **EP 1 864 822 A1**
(43) Date of publication of application: **12.12.2007**
(21) Application number: 06730417.0
(22) Date of filing: 29.03.2006
(51) Int. Cl.: B41M 1/00

(54) **OPTICAL RECORDING MEDIUM, METAL COMPLEX COMPOUND AND ORGANIC DYE COMPOUND**

(30) Priority: 29.03.2005 JP 2005095905
(71) Applicant: Mitsubishi Kagaku Media Corporation, Ltd., Minato-ku, Tokyo 108-0014 (JP)
(72) Inventor: MIYAZAWA, Takashi, a 5-chome, Minato-ku, Tokyo, 1080014 (JP); KUROSE, Yutaka, a 5-chome, Minato-ku, Tokyo, 1080014 (JP)
(74) Representative: HOFFMANN EITLE
(86) International application number: PCT/JP2006/306469
(87) International publication number: WO 2006/104196

(57) **Abstract**

Problem: To provide an optical recording medium having a recording layer improved in light stability that is capable of writing and reading of high-density optical information by a short-wavelength laser beam.

Means for Solving the Problems: There is provided an optical recording medium with a recoding layer comprising an organic dye compound, wherein the recording layer contains a metal complex compound composed of a pyridone azo compound represented by the following the general formulas [I] to [III] and a divalent ion of metal coordinated to it such as nickel, cobalt, iron, zinc, copper, manganese and the like, wherein the pyridone azo compound contains a 6-hydroxy-2-pyridone structure as a coupling component and isoxazole, 1,2,4-triazole or pyrazole structure as a diazo component. 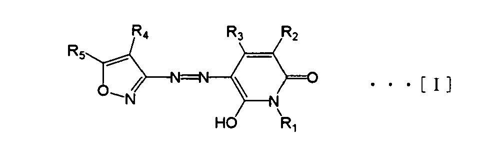 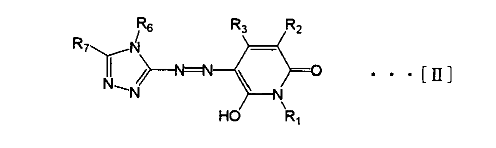 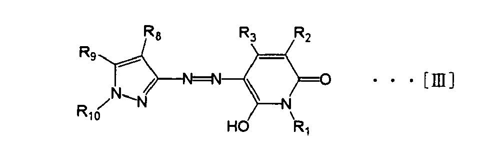 (In the general formulas [I] to [III], R₁ to R₁₀ each is independently a hydrogen atom or monovalent functional group.)

## Description

### Technical Field

The present invention relates to an optical recording medium and the like, in more detail, an optical recording medium and the like relative to a blue laser beam improved in light stability.

### Background Art

Various optical recording media such as CD-R/RW, DVD-R/RW, MO and the like are widely accepted and used as an external memory device for an information processing equipment such as a computer and the like, since a large capacity of information can be stored and easily and randomly accessed. Among them, an organic dye type optical recording medium provided with a recording layer containing an organic dye compound as represented by CD-R and DVD-R is considered to be superior in terms of a low cost and its easiness manufacturing.
On the other hand, an increase of the amount of information handled has requested an increase of a recording density in a medium and a high density writable and readable optical recording medium has been proposed for use of a laser beam with a short oscillation wavelength such as a blue laser beam and the like that has been significantly developed in recent years.

However, a commercially available optical recording medium such as CD-R, DVD-R and the like is generally designed, for example, for CD-R to match with a wavelength of the laser beam around 780 nm in writing and reading and for DVD-R to match with a wavelength of the laser beam around 600 to 700 nm in writing and reading. Such recording media suitable for optical writing and reading with use of a relatively long wavelength laser beam have such a problem as use of a shorter wavelength laser beam for writing and reading prevents them from writing and reading because of low reflectance.
For a dye for writing such CD-R and DVD-R, for example, metal-containing azo complex compounds as an optical recording medium is used (see Patent Document 1, Patent Document 2 and Patent Document 3).

Patent Document 1: International Publication: WO 91/18950
Patent Document 2: JP-A 09-277703
Patent Document 3: JP-A 08-295811

### Disclosure of the Invention

### Problems to be solved by the Invention

The optical recording medium according to above Patent Document 1 and Patent Document 2 generally uses a compound with an N, N-dialkylaniline structure as a coupling component of an azo compound used in CD-R and DVD-R.
Use of such N, N-dialkylaniline structure is useful because it can give a dye having a very large molar absorption coefficient, but λₘₐₓ of a solution of a metal-containing azo complex using such a coupling component is at 500 nm or longer. This indicates that an absorption spectrum of a coated film containing such a dye does not have sufficient absorption to record with a blue laser beam or a laser beam at wavelength around 350 nm. That is, its absorption maximum wavelength is too long. For example, little absorption spectrum is observed near 405 nm, where the blue laser has an oscillation central wavelength, causing a problem such that there is a tendency of yielding low sensitivity to the blue laser beam. Therefore, a coupling component with a large absorption at shorter wavelength side is required.

On the other hand, according to Patent Document 3, a compound using a pyridone type coupling component is known to have λₘₐₓ at shorter wavelength than compounds according to Patent Document 1 and Patent Document 2. However, the present inventors have studied and found that compounds even having benzothiazole, thiazole or pyridine as a diazo component according to Patent Document 3 have the maximum absorption wavelength too long and therefore show little absorption at wavelength around 405 nm (between 405 nm -10 nm and 405 nm +5 nm), and thus improving the property as a dye is not promising. Therefore, a combination of a diazo component suitable for absorption at shorter wavelength with a coupling component is required to record in the above wavelength region.

The present invention is intended to address the problems highlighted in developing an optical recording medium, on which the optical information with higher density than DVD is written and read using, for example, a short wavelength blue laser beam and the like.
That is, an object of the present invention is to provide an optical recording medium, on which the high density optical information is written and read using a short wavelength laser beam of 350 nm or longer and 530 nm or shorter, for example, a laser beam of 385 nm or longer and 410 nm or shorter.
Another object of the present invention is also to provide a metal complex compound suitable for a recording layer or others of the optical recording medium.
Another object of the present invention is further to provide an organic dye compound with improved light stability.

### Means for Solving the Problems

The present invention uses an organic dye compound containing a metal-containing pyridone azo compound in order to address the above problems.
That is, the present invention provides an optical recoding medium for a short wavelength laser beam in an ultraviolet laser to blue laser wavelength region (particularly 350 nm to 530 nm) characterized in that the medium includes a substrate and a recording layer, which is disposed directly or through other layer on the substrate and information can be written or recorded thereon by light irradiation, wherein the recording layer includes a metal complex compound composed of an organic dye compound having a coupling component consisting of a 6-hydroxy-2-pyridone structure and a diazo component selected from isoxazole, triazole and pyrazole and a metal ion coordinated with the organic dye compound.
The recording layer of the optical recording medium applicable to the present invention contains the metal complex compound composed of the above organic dye compound and a predetermined metal ion. The organic dye compound to constitute the metal complex compound in the present invention is characterized with a pyridone azo compound represented by the following general formulas [I] to [III].

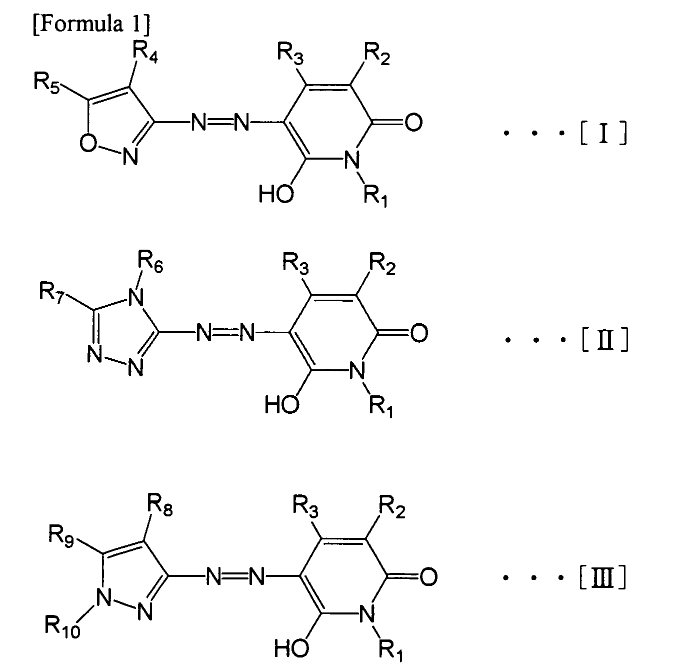

(In the general formulas [I] to [III], R₁ to R₁₀ each is independently a hydrogen atom or monovalent functional group.)
It is preferable that R₁ to R₁₀ represented in the general formulas [I] to [III] are specifically hydrogen atom or monovalent functional group represented below.
That is, in the R₁ to R₁₀ in the general formulas [I] to [III], R₁ preferably represents any one kind selected from a hydrogen atom, linear or branched alkyl group, cycloalkyl group, hydroxyl group, linear or branched alkoxy group, saturated or unsaturated heterocyclic group, aryl group, aralkyl group, acyl group, amino group and acylamino group.
R₂ to R₅ and R₇ to R₉ preferably represent any one kind selected from a hydrogen atom, linear or branched C1-C18 alkyl group, C3-C 18 cycloalkyl group, linear or branched C2-C 18 alkenyl group, saturated or unsaturated heterocyclic group, C6-C18 aryl group, C7-C20 aralkyl group, linear or branched C1-C18 alkoxy group, linear or branched C1-C18 alkylthio group, a halogen atom, nitro group, cyano group, mercapto group, hydroxyl group, formyl group, acyl group, amino group, acylamino group, carbamate group, carboxylate ester group, acyloxy group, carbamoyl group, sulfonyl group, sulfinyl group, sulfamoyl group, sulfonate ester group and sulfonamide group.
R₆ and R₁₀ preferably represent any one kind selected from a hydrogen atom, linear or branched alkyl group, cycloalkyl group and acyl group.

It is preferable that the metal ion comprising metal complex compound is a divalent ion of metal selected from group 3 to group 12 in the periodic table. Moreover, it is preferable that the metal ion is an ion of at least one kind of metal selected from nickel, cobalt, iron, zinc, copper and manganese. The periodic table herein is a long form of the periodic table.
Use of the metal-containing pyridone azo compound formed by a combination of a divalent ion of metal and the pyridone azo compound represented by the general formulas [I] to [III] can improve light stability of the recording layer of the optical recording medium.
Light used for writing and reading in the optical recording medium of the present invention includes a laser beam at wavelength of 350 nm to 530 nm, as a specific example, a semiconductor laser beam at 385 nm to 410 nm.

The present invention concerns an optical recording medium comprising a recording layer containing an organic dye, and the organic dye includes a metal complex compound consisting of a pyridone azo compound represented by the following general formulas [I] to [III] and a divalent ion of metal coordinated with the pyridone azo compound and selected from group 3 to group 12 in the periodic table.

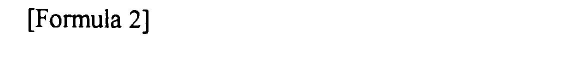

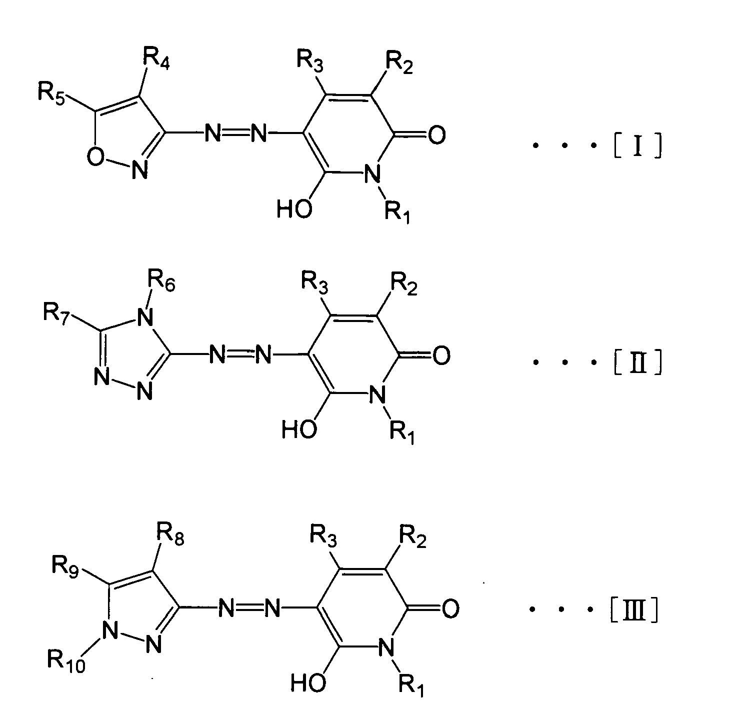

### (In the general formulas [I] to [III], R₁ to R₁₀ each is independently a hydrogen atom or monovalent functional group.)

At this point, the pyridone azo compound represented in the general formulas [I] to [III] has preferably a molecular weight of 1,000 or less.
Moreover, according to the present invention, there is provided a metal complex compound comprising a divalent ion of metal of metal selected from group 3 to group 12 in the periodic table and a pyridone azo compound coordinated with the ion of metal and represented by the following general formula [I] coordinated with the metal ion.

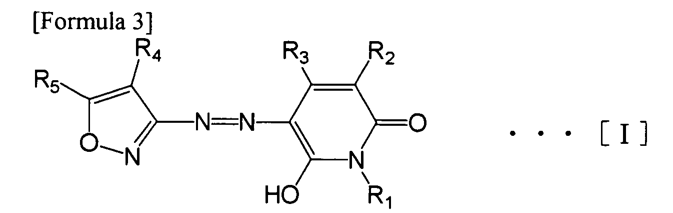

### (In the general formulas [I], R₁ to R₅ each is independently a hydrogen atom or monovalent functional group.)

That is, the metal complex compound applicable to the present invention may be used as an organic dye having the maximum absorption wavelength at 500 nm or shorter with a structure, in which the pyridone azo compound represented by the general formula [I] is coordinated with a divalent metal such as nickel, cobalt, iron, zinc, copper, manganese and the like.

Moreover, according to the present invention, there is provided an organic dye compound comprising a metal complex compound consisting of a divalent ion of metal and a pyridone azo compound, and the pyridone azo compound contains a coupling component consisting of a 6-hydroxy-2-pyridone structure and a diazo component consisting of isoxazole.
That is, the organic dye compound applicable to the present invention uses a pyridone azo compound having a structure of a combination of a particular coupling component and a diazo component, and coordinates this azo compound with a divalent metal to give excellent properties in light stability.

### Effect of the Invention

The optical recording medium applicable to the present invention enables high-density optical information to be written and read in high sensitivity using a short wavelength laser beam.

### Best Modes for Carrying Out the Invention

A best mode to carry out the present invention (referred to as exemplary embodiment hereinafter) will be detailed below. The present invention is, however, not limited to the following exemplary embodiments and various modifications may be carried out within a scope of the invention. Drawings used are also used only to illustrate the present exemplary embodiments, but not intended to represent an actual size.
In addition, a monovalent functional group R₁ to R₁₀ in the pyridone azo compound represented by the general formulas [I] to [III] may have a substituent as needed. However, the term "substituent" in this case or the term "substituent" involved in "may be substituted" or "may have a substituent" described hereinafter does not include an acidic water soluble group such as carboxyl group, sulfonic acid group and the like. It is not desirable that the water soluble group such as the carboxyl group, sulfonic acid group and the like are included in the pyridone azo compound represented by the general formulas [I] to [III] because its solubility in an organic solvent is reduced. Also, water resistance of the recording layer of the optical recording medium is lowered to make the formation of a consistent film difficult.

The term "as needed" means proper selection for fine control of solubility in an organic solvent or absorption in a specific wavelength region of the pyridone azo compound represented by the general formulas [I] to [III] while not significantly affecting the solubility in the organic solvent or absorption in the specific wavelength region thereof or for a merit in a manufacture process, for example, easier procurement of chemicals used in synthesis, cost or others.

### (Pyridone azo compounds)

A metal-containing pyridone azo compound used in the optical recording medium applicable to the present exemplary embodiment composed of a metal ion and a pyridone azo compound represented by the above general formulas [I] to [III] (hereinafter maybe simply referred to as a pyridone azo compound) can be used as the organic dye compound that has a proper absorption in a blue light region at wavelength of 350 nm to 530 nm, is suitable for writing with a blue laser beam and has light stability in practical use.

In the pyridone azo compound represented by the above general formulas [I] to [III], an heteroaromatic ring on the left-hand side of the azo group (-N=N-) is referred to as a diazo component, while a 6-hydroxy-2-pyridone structure on the right-hand side thereof is referred to as a coupling component.
The diazo component in the pyridone azo compound represented by the above general formulas [I] to [III] herein includes, for example, isoxazole, 1,2,4-triazole, pyrazole and the like.
Among them, triazole may have a tautomeric structure, optionally taking a form of the general formulas [II]' and [II]" described below, but is given in a general formula [II] as a representative example.

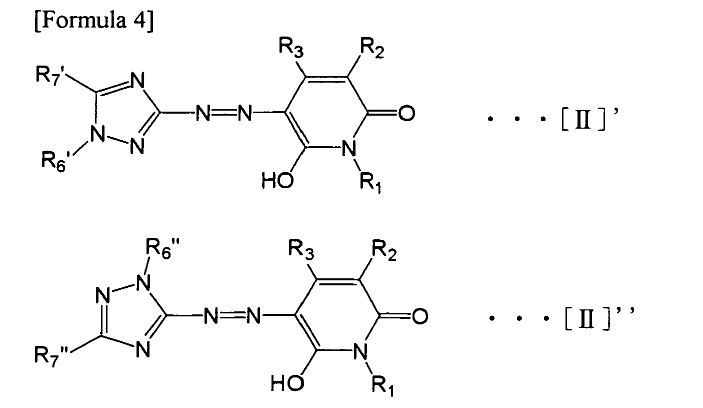

In the general formulas [II]' and [II]", the substituents are given by R₆', R₆" and the like for convenience, but they use the same functional group as R₆. R₇' and R₇" use the same functional group as R₇.
When used in combination with the same coupler, the maximum absorption wavelength among these diazo components tends to generally shift to a longer wavelength side in the order of the general formula [I] < the general formula [II] < the general formula [III] in the wavelength region between 400 nm and 500 nm. A structure of the general formula [I] is particularly preferred in order to increase the absorption at the wavelength of 405 nm to improve the sensitivity.

Monovalent functional groups R₁ to R₁₀ in the pyridone azo compounds represented by the general formulas [I] to [III] are described next.
R₁ in the pyridone azo compounds represented by the general formulas [I] to [III] represents any one kind of functional group selected from a hydrogen atom, linear or branched alkyl group, cycloalkyl group, hydroxyl group, linear or branched alkoxy group, saturated or unsaturated heterocyclic group, aryl group, aralkyl group, acyl group represented by -COR₁₁, amino group represented by -NR₁₂R₁₃ and acylamino group represented by -NHCOR₁₄.

Preferred functional groups of R₁ include a hydrogen atom, linear or branched C1-C12 alkyl group, C3-C10 cycloalkyl group, saturated or unsaturated heterocyclic group, C6-C12 aryl group, C7-C16 aralkyl group, amino group represented by -NR₁₂R₁₃ (exclude a hydrogen atom in R₁₂ and R₁₃ in this case), acylamino group represented by -NHCOR₁₄ and the like. Among them, they have relatively good solubility except R₁ being an acylamino group or aryl group.

R₂ to R₅ and R₇ to R₉ each are independently any one kind of functional group selected from a hydrogen atom, optionally substituted linear or branched C1-C18 alkyl group such as methyl, ethyl, propyl, isopropyl, n-butyl, sec-butyl, tert-butyl, n-heptyl and the like; optionally substituted C3-C 18 cycloalkyl group such as cycloproyl, cyclopentyl, cyclohexyl, adamantyl and the like; optionally substituted linear or branched C2-C18 alkenyl group such as vinyl, propenyl, hexenyl and the like; optionally substituted saturated or unsaturated heterocyclic group such as 2-thienyl, 2-pyridyl, 4-piperidyl, morpholino and the like; optionally substituted C6-C18 aryl group such as phenyl, tolyl, xylyl, mesityl, naphthyl and the like; optionally substituted C7-C20 aralkyl group such as benzyl, phenethyl and the like; optionally substituted linear or branched C1-C18 alkoxy group such as methoxy, ethoxy, n-propoxy, isopropoxy, n-butoxy, sec-butoxy, tert-butoxy and the like; optionally substituted linear or branched C1-C18 alkylthio group such as methylthio, ethylthio, n-propylthio, n-butylthio, sec-butylthio, tert-butylthio and the like; a halogen atoms such as fluorine, chorine, bromine and the like; nitro group, cyano group, mercapto group, hydroxyl group, formyl group, acyl group represented by -COR₁₁, amino group represented by -NR₁₂R₁₃, acylamino group represented by -NHCOR₁₄, carbamate group represented by -NHCOOR₁₅, carboxylate ester group represented by -COOR₁₆, acyloxy group represented by -OCOR₁₇, carbamoyl group represented by
- CONR₁₈R₁₉, sulfonyl group represented by -SO₂R₂₀, sulfinyl group represented by -SOR₂₁, sulfamoyl group represented by -SO₂NR₂₂R₂₃, sulfonate ester group represented by -SO₃R₂₄, and sulfonamide group represented by -NHSO₂R₂₅.

Further, R₆ and R₁₀ are any one kind of functional group selected from a hydrogen atom, linear or branched alkyl group, cycloalkyl group and acyl group.

Here, R₁₁, R₁₄ to R₁₇ and R₂₀, R₂₁, R₂₄ and R₂₅ each independently represent a hydrocarbon group or heterocyclic group. Also, R₁₂, R₁₃, R₁₈, R₁₉, R₂₂ and R₂₃ each independently represent any one kind of a hydrogen atom, hydrocarbon group or heterocyclic group. These are optionally substituted as needed.

Specifically, a hydrocarbon group represented by R₁₁ to R₂₅ includes, for example, linear or branched C1-C18 alkyl group such as methyl, ethyl, propyl, isopropyl, n-butyl, sec-butyl, tert-butyl, n-heptyl and the like; C3-C18 cycloalkyl group such as cycloproyl, cyclopentyl, cyclohexyl, adamantyl and the like; linear or branched C2-C18 alkenyl group such as vinyl, propenyl, hexenyl and the like; C3-C 18 cyclic alkenyl group such as cyclopentenyl, cyclohexenyl and the like; C7-C20 aralkyl group such as benzyl, phenethyl and the like; C6-C18 aryl group such as phenyl, tolyl, xylyl, mesityl, naphthyl and the like; and others.
Alkyl chain unit and aryl group unit of these hydrocarbon groups may be further substituted with substituents, which can be positioned on the alkyl chain unit of R₂-R₅ described hereinafter. The position of these substituents is not particularly limited and the number of the substituents may also be zero to plural. When plural substituents are present, they may be identical or different.

Also, a heterocyclic group represented by R₁₁ to R₂₅ includes, for example, a saturated heterocyclic ring such as 4-piperidyl, morpholino, 2-morpholinyl, piperazyl and the like; a heteroaromatic ring such as 2-furyl, 2-pyridyl, 2-thiazolyl, 2-quinolyl and the like. These heterocyclic groups may contain plural heteroatoms or further substituents and their bonding position is not limited. Preferred structures of the heterocyclic group include a 5 to 6-membered saturated heterocyclic ring and a 5 to 6-membered monocyclic or two-ring condensed heteroaromatic ring.

Specific chemical structures are next illustrated for the above acyl, amino, acylamino, carbamate, carboxylate ester, acyloxy, carbamoyl, sulfonyl, sulfinyl, sulfamoyl, sulfonate ester and sulfonamide groups.
The acyl group (-COR₁₁) includes functional groups with the structure below and the like.

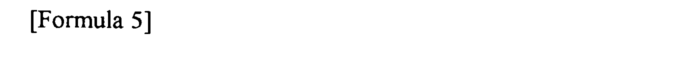

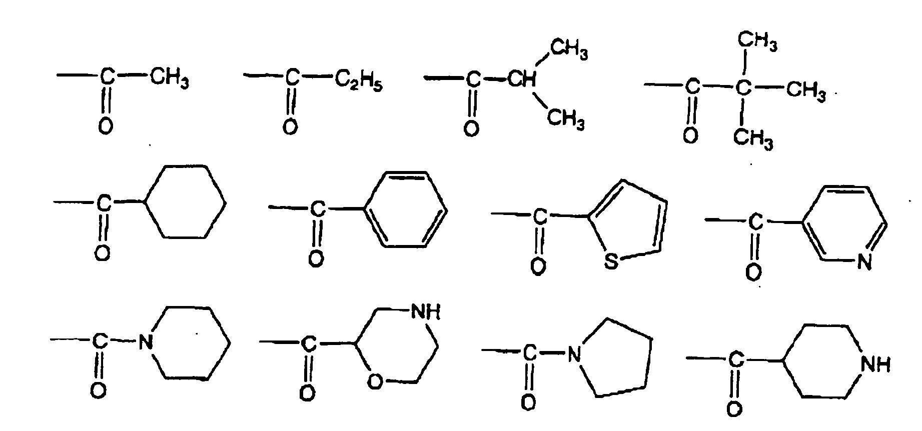

The amino group (-NR₁₂R₁₃) includes functional groups with the structure below and the like.

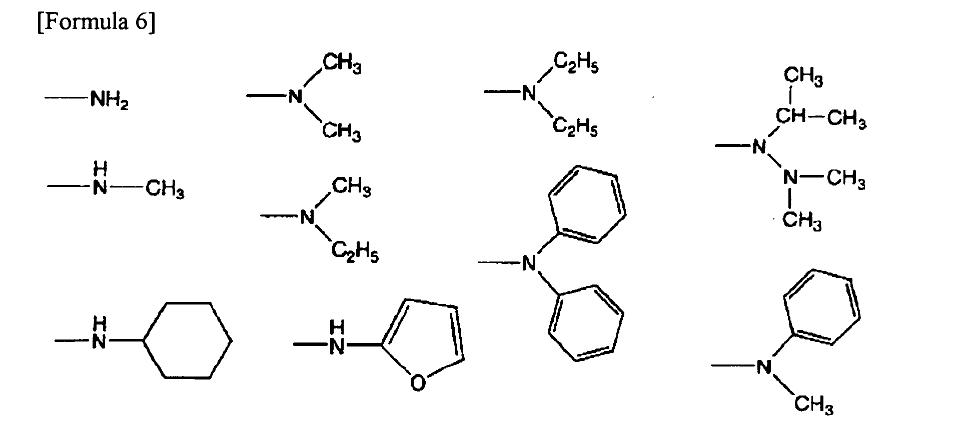

The acylamino group (-NHCOR₁₄) includes functional groups with the structure below and the like.

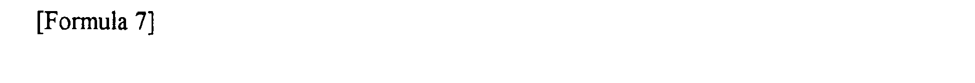

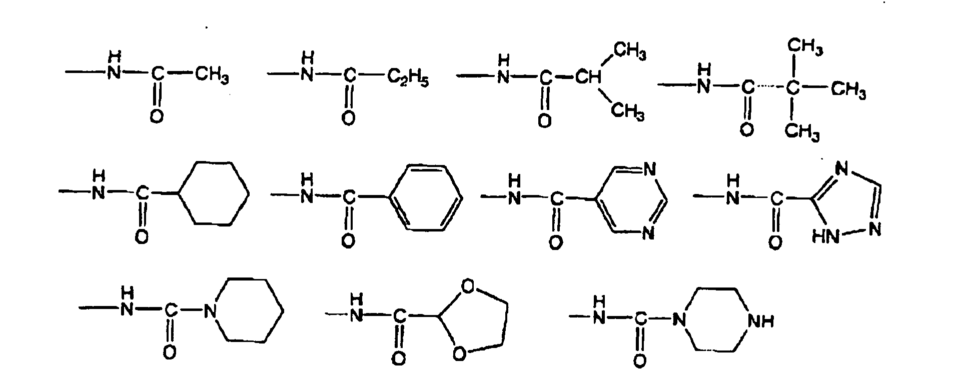

The carbamate group (-NHCOOR₁₅) includes functional groups with the structure below and the like.

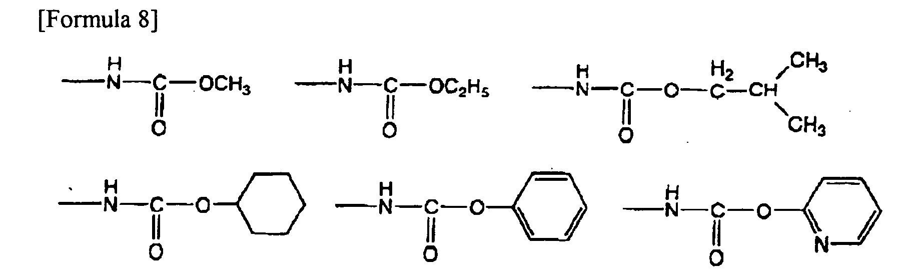

The carboxylate ester group (-COOR₁₆) includes functional groups with the structure below and the like.

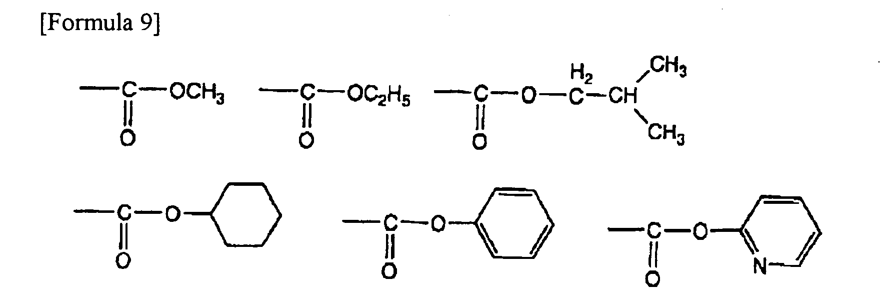

The acyloxy group (-OCOR₁₇) includes functional groups with the structure below and the like.

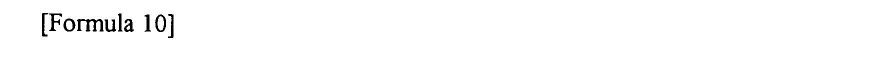

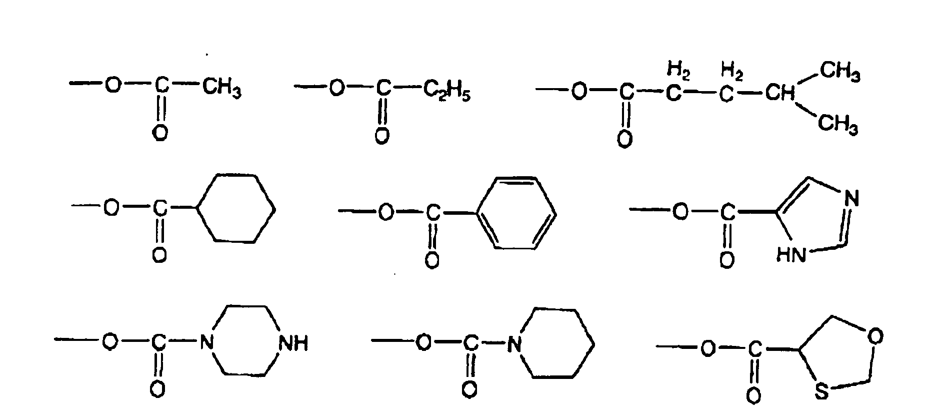

The carbamoyl group (-CONR₁₈R₁₉) includes functional groups with the structure below and the like.

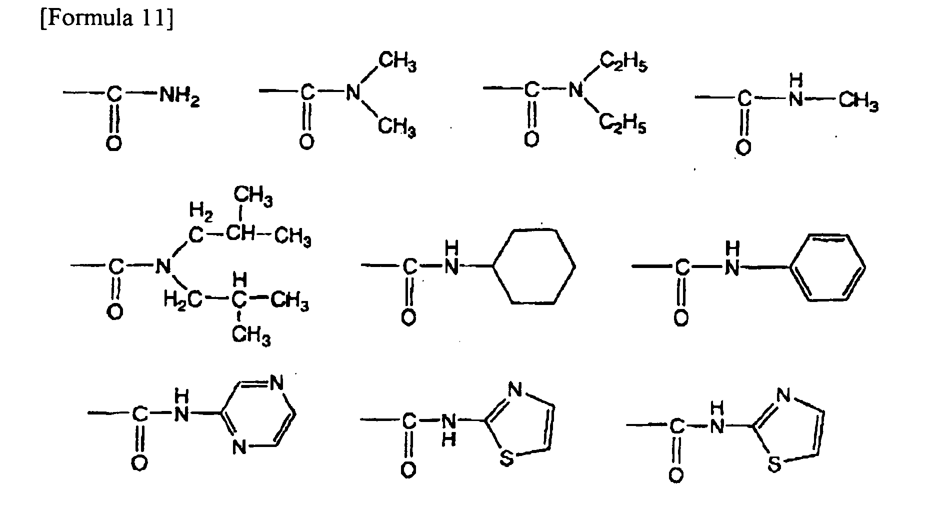

The sulfonyl group (-SO₂R₂₀) includes functional groups with the structure below and the like.

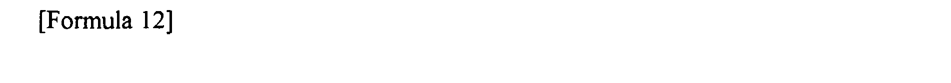

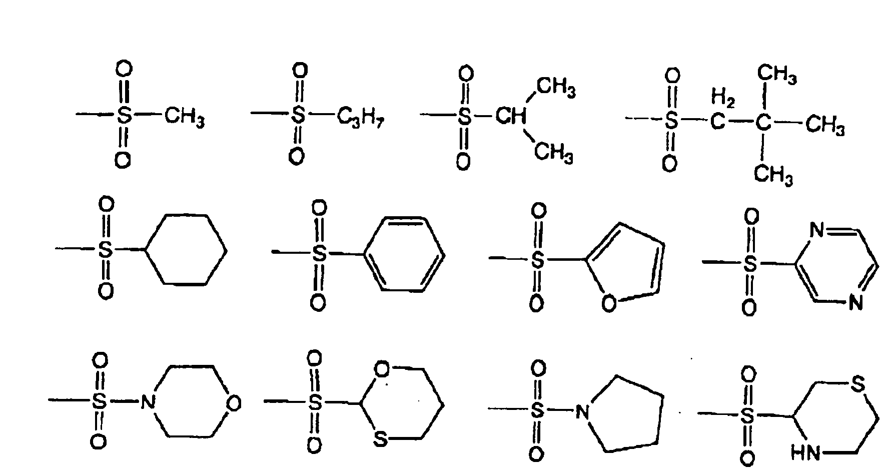

The sulfinyl group (-SO₂₁) includes functional groups with the structure below and the like.

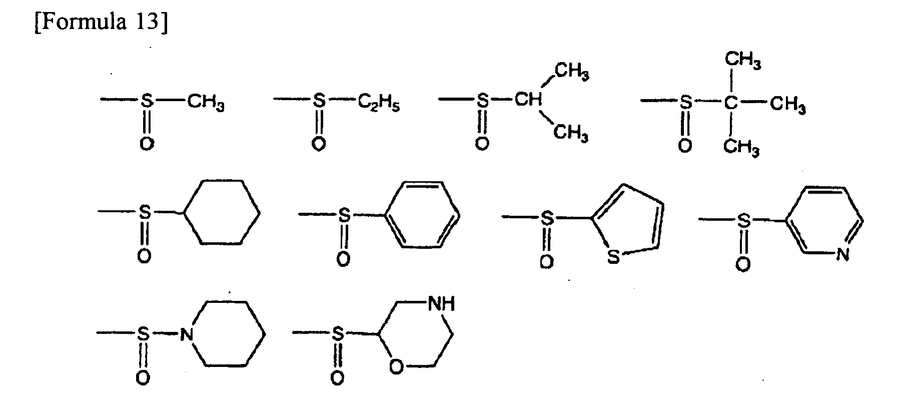

The sulfamoyl group (-SO₂NR₂₂R₂₃) includes functional groups with the structure below and the like.

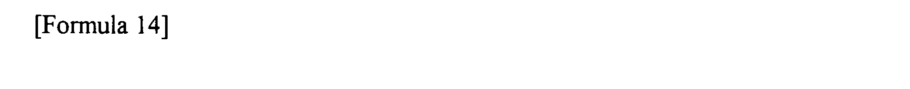

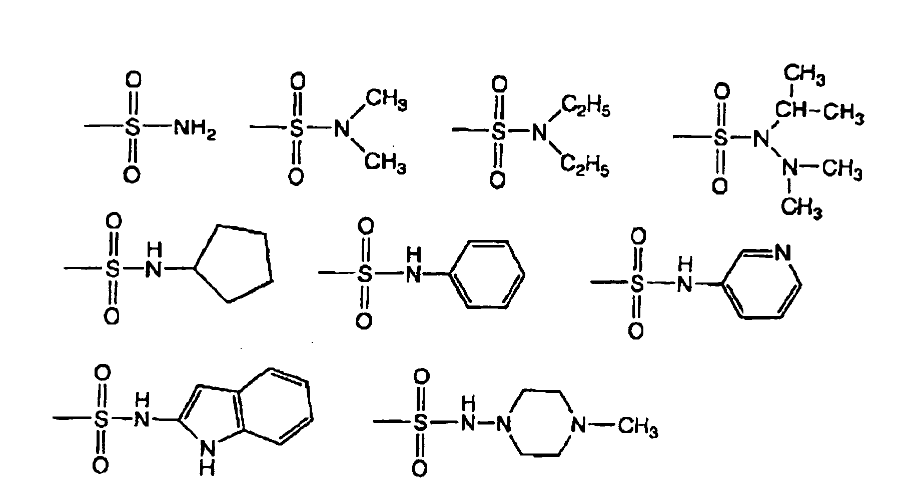

The sulfonate ester group (-SO₃R₂₄) includes functional groups with the structure below, and the like.

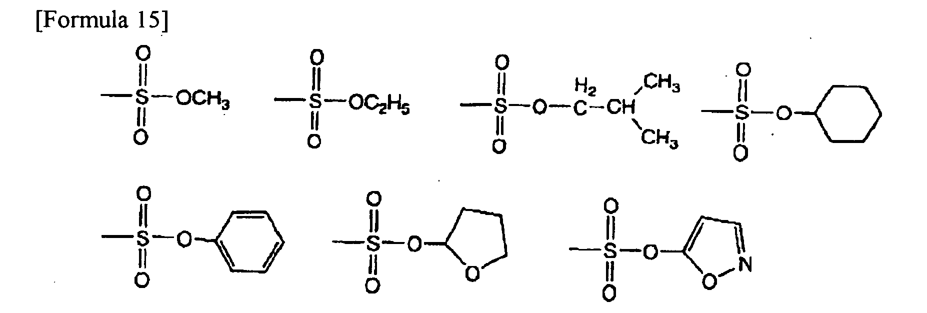

The sulfonamide group (-NHSO₂R₂₅) includes functional groups with the structure below and the like.

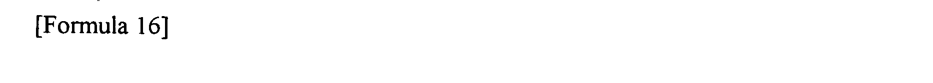

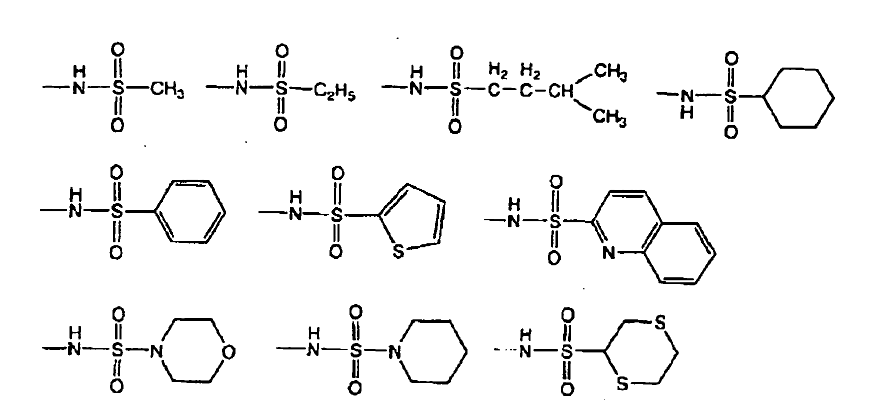

In the above pyridone azo compound represented by the general formulas [I] to [III], the alkyl chain unit, in which R₁ to R₁₀ is a linear or branched alkyl group, cycloalkyl group, linear or branched alkenyl group, cycloalkenyl group, linear or branched alkoxy group or linear or branched alkylthio group and the alkyl chain unit, in which R₁₁ to R₂₅ is alkyl group may further have substituents.

Such substituents are illustrated as, for example, C1-C10 alkoxy group such as methoxy, ethoxy, n-propoxy, isopropoxy, n-butoxy, sec-butoxy, tert-butoxy and the like; C2-C12 alkoxyalkoxy group such as methoxymethoxy, ethoxymethoxy, propoxymethoxy, ethoxyethoxy, propoxyethoxy, methoxybutoxy and the like; C3-C15 alkoxyalkoxyalkoxy group such as methoxymethoxymethoxy, methoxymethoxyethoxy, methoxyethoxymethoxy, methoxymethoxyethoxy, ethoxyethoxymethoxy and the like; C6-C12 aryloxy group such as phenoxy, tolyloxy, xylyoxy, naphthoxy and the like; C2-C12 alkenyloxy groups such as allyloxy, vinyloxy and the like; and others.

Other substituents further include a heterocyclic group such as 2-thienyl, 2-pyridyl, 4-piperidyl, morpholino and the like; cyano group, nitro group, hydroxyl group, mercapto group, alkylthio group such as methylmercapto, ethylmercapto and the like; amino group, C1-C10 alkylamino group such as N,N-dimethylamino, N,N-diethylamino and the like; C1-C6 alkylsulfonylamino group such as methylsulfonylamino, ethylsulfonylamino, n-propylsulfonylamino and the like; a halogen atom such as fluorine, chlorine, bromine and the like; alkylcarbonyl groups such as methylcarbonyl, ethylcarbonyl, isopropylcarbonyl and the like; C2-C7 alkoxycarbonyl group such as methoxycarbonyl, ethoxycarbonyl, n-propoxycarbonyl, isopropoxycarbonyl, n-butoxycarbonyl and the like; C2-C7 alkylcarbonyloxy group such as methylcarbonyloxy, ethylcarbonyloxy, n-propylcarbonyloxy, isopropylcarbonyloxy, n-butylcarbonyloxy and the like; C2-C7 alkoxycarbonyloxy group such as methoxycarbonyloxy, ethoxycarbonyloxy, n-propoxycarbonyloxy, isopropoxycarbonyloxy, n-butoxycarbonyloxy and the like; and others.
In addition, a bonding position of these groups is not particularly limited and the number of substituents may be zero to plural. When plural substituents are present, they may be identical or different.

R₂ to R₅ and R₇ to R₉ are not particularly limited but are preferably the following ones in terms of ease of synthesis, solubility in a coating solvent and the like.
That is, hydrogen atom, linear or branched C1-C12 alkyl group, C3-C 10 cycloalkyl, linear or branched C2-C12 alkenyl group, C6-C 18 aryl group, saturated or unsaturated heterocyclic group, C7-C18 aralkyl group, linear or branched C1-C12 alkoxy group, linear or branched C1-C12 alkylthio group, a halogen atoms; nitro group, cyano group, mercapto group, hydroxyl group, formyl group; acyl group represented by -COR₁₁, amino group represented by -NR₁₂R₁₃, acylamino group represented by -NHCOR₁₄, carbamate group represented by -NHCOOR₁₅, carboxylate ester group represented by -COOR₁₆, acyloxy group represented by -OCOR₁₇, carbamoyl group represented by -CONR₁₈R₁₉, sulfonyl group represented by -SO₂R₂₀, sulfinyl group represented by -SOR₂₁, sulfamoyl group represented by -SO₂NR₂₂R₂₃, sulfonate ester group represented by -SO₃R₂₄, and sulfonamide group represented by -NHSO₂R₂₅. Among the above, as R₇ to R₉, the following groups may be preferred in terms of synthesis and solubility: linear or branched alkyl, cycloalkyl, alkoxy, alkylthio, mercapto, hydroxyl, acyl, carboxylate ester, acyloxy, carbamoyl, sulfonyl, sulfinyl and the like.

Among them, as R₂, the following groups may be especially preferred, for example, hydrogen atom, linear or branched C1-C12 alkyl group, C3-C10 cycloalkyl, C7-C 18 aralkyl group, linear or branched C1-C12 alkoxy group, C6-C18 aryl group, saturated or unsaturated heterocyclic group, a halogen atoms; cyano group, hydroxyl group, acyl group represented by -COR₁₁, amino group represented by -NR₁₂R₁₃, acylamino group represented by -NHCOR₁₄, carbamate group represented by -NHCOOR₁₅, carboxylate ester group represented by -COOR₁₆, acyloxy group represented by -OCOR₁₇, carbamoyl group represented by -CONR₁₈R₁₉, sulfonyl group represented by -SO₂R₂₀, sulfinyl group represented by -SOR₂₁, and sulfonamide group represented by -NHSO₂R₂₅.

Moreover, as R₃, the following groups may be especially preferred, for example, hydrogen atom, linear or branched C1-C12 alkyl group, C3-C10 cycloalkyl, linear or branched C2-C12 alkenyl group, C6-C18 aryl group, saturated or unsaturated heterocyclic group, C7-C18 aralkyl group, linear or branched C1-C12 alkoxy group, a halogen atoms, hydroxyl group, acyl group represented by -COR₁₁, amino group represented by -NR₁₂R₁₃, acylamino group represented by -NHCOR₁₄, carbamate group represented by -NHCOOR₁₅, carboxylate ester group represented by -COOR₁₆, acyloxy group represented by -OCOR₁₇, carbamoyl group represented by -CONR₁₈R₁₉, sulfonamide group represented by -NHSO₂R₂₅.
Further, the above functional groups can be chosen for each of R₂ and R₃ in terms of ease of synthesis in addition to solubility in an organic solvent and effect on the maximum absorption wavelength. For example, among the above ones, linear or branched alkyl, cycloalkyl, hydroxyl, acyl, amino, carboxylate ester, acyloxy, carbamoyl group and the like can be listed as preferred ones in terms of the plus side in synthesis and solubility.

R₆ and R₁₀ preferably include a hydrogen atom, linear or branched alkyl, cycloalkyl and acyl group represented by -COR₁₁. Among them, a hydrogen atom, linear or branched C1-C8 alkyl group, C3-C8 cycloalkyl group, acyl group represented by -COR₁₁ and the like can be listed.
Among them, particularly preferable R₆ includes a hydrogen atom and a linear or branched C1-C8 alkyl group. The Linear or branched C1-C8 alkyl group is particularly preferred for R₁₀. R₆ and R₁₀ may affect solubility, maximum absorption wavelength and the magnitude of absorbance in some cases. These R₂ to R₁₀ are optionally substituted as needed.

It is found that light stability particularly depends on a combination of a diazo component and a metal complex compound composed of the 6-hydroxy-2-pyridone structure as the coupler structure of the present invention. Light stability is good and stable in a metal complex compound of the present invention with the general formula [II], that is, one containing triazole as a diazo component and tends to decrease in the order of a metal complex of the present invention with the general formula [III] followed by that with the general formula [I]. It is also found that light stability is correlated with R₁ to R₁₀ as the substituents thereof. However, light stability described in the present invention includes the case where poor solubility results in poor light stability. These results are given in Table 1. Any metal complex compound of the present invention with the general formula [II], which has good and stable light stability has good light stability as far as R₁ to R₃ and R₆ to R₇ are chosen from the above ones. In contrast, a metal complex compound of the present invention with the general formula [III] and that with the general formula [I] each have a particular combination of substituent R, which leads to undesirable solubility or light stability as shown below (see Table 1).
In the optical recording medium characterized in that the above organic dye compound is the pyridone azo compound represented by the following general formula [I]:

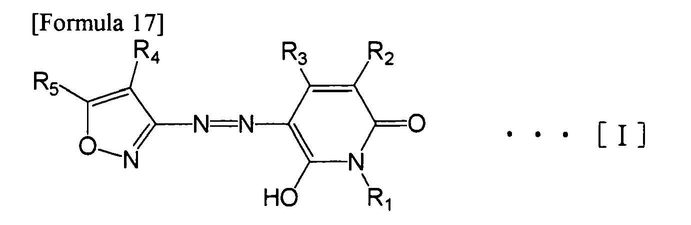

R₁ in the general formula [I] is preferably a monovalent functional group except an unsubstituted amino group (-NH₂). R₂ to R₅ each are independently preferably a hydrogen atom or a monovalent functional group. Namely, when R₁ is an unsubstituted amino group (-NH₂), solubility decreases depending on a combination with substituents R₂ to R₅, resulting in a possible decrease of light stability.
A combination of a cyano group as R₂ and an alkyl group as R₃ shows more preferred trend.
In the optical recording medium characterized in that the above organic dye compound is the pyridone azo compound represented by the following general formula (IV):

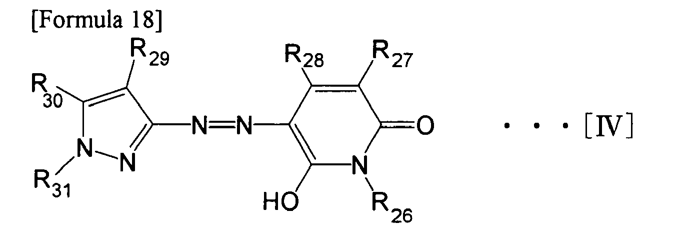

R₃₁ in the general formula (IV) is preferably a monovalent functional group except a hydrogen atom. R₂₆ to R₃₀ each are independently preferably a hydrogen atom or a monovalent functional group.
When R₃₁ is a hydrogen atom, solubility is reduced and light stability is possibly deteriorated.
A combination of a cyano group as R₂₇ and an alkyl group as R₂₈ shows more preferred trend.
Except the above unfavorable combination, use of a combination of preferred R₁ to R₁₀ in the general formulas [I] to [III] as described above and R₂₆ to R₃₁ corresponding to R₁ to R₁₀ gives good light stability.

### (Metal ion)

A metal ion is next described.
A metal to coordinate with the pyridone azo compound represented by the general formulas [I] to [III] to form a metal-containing pyridone azo compound is not particularly limited as far as it has coordinating capability with the pyridone azo compound, and chosen from transition elements and representative elements. The oxidation number of the metal is not limited. A ratio of the metal to the pyridone azo compound in the metal complex compound described hereinafter is also not particularly limited. The metal complex compound may be produced in a form of a complex containing a charge carrying counter ion in addition to the metal and pyridone azo compound.

A preferred structure of the complex formed between the metal and the pyridone azo compound has a structure in which one divalent metal is coordinated with two pyridone azo compounds in terms of ease of the complex formation since the pyridone azo compound becomes a tridenate ligand with one negative charge. That is, a metal ion forming a metal complex with the pyridone azo compound represented by the general formulas [I] to [III] is preferably a divalent metal chosen from group 3 to group 12 in the periodic table (in the long form). Among these divalent metals, at least one kind of the metal chosen from nickel, cobalt, iron, zinc, copper and manganese is particularly preferred.
Also, the metal-containing pyridone azo compound may have a structure, in which plural kinds of the pyridone azo compounds are coordinated with the metal. A recording layer of the optical recording medium described later may also contain plural kinds of the metal-containing pyridone azo compounds.

The molecular weight of the pyridone azo compound represented by the general formulas of [I] to [III] preferably has a range of 1000 or less, more preferably a range of 700 or less. When the molecular weight is excessively high, the absorption coefficient per gram is decreased, undesirably lowering absorption relative to the amount of the dye.

Preferred examples of the pyridone azo compounds represented by the general formulas [I] to [III] specifically include the compounds represented by (1) to (57) given below.
The pyridone azo compound represented by the general formula [I] includes, for example, the compound (1) to (20).

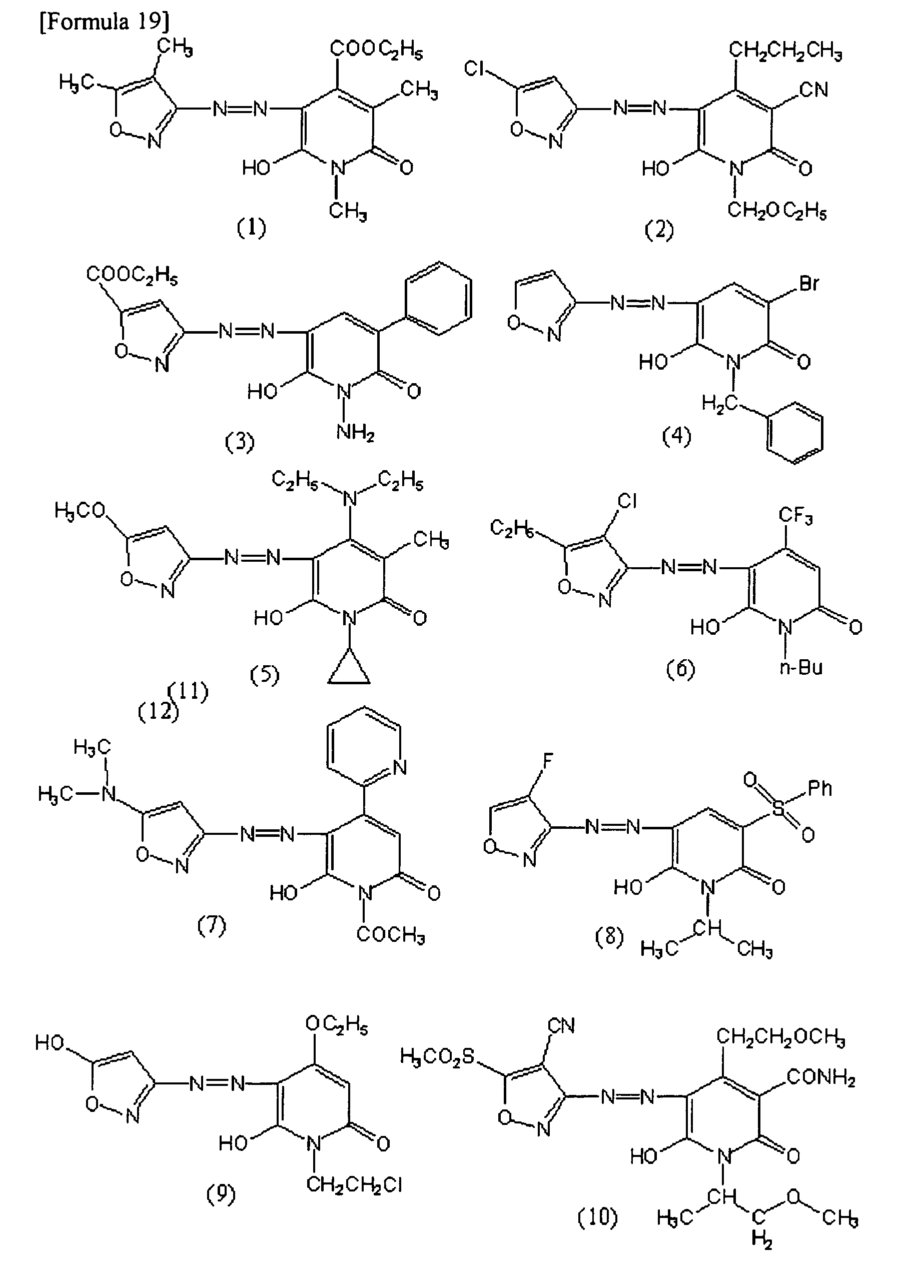

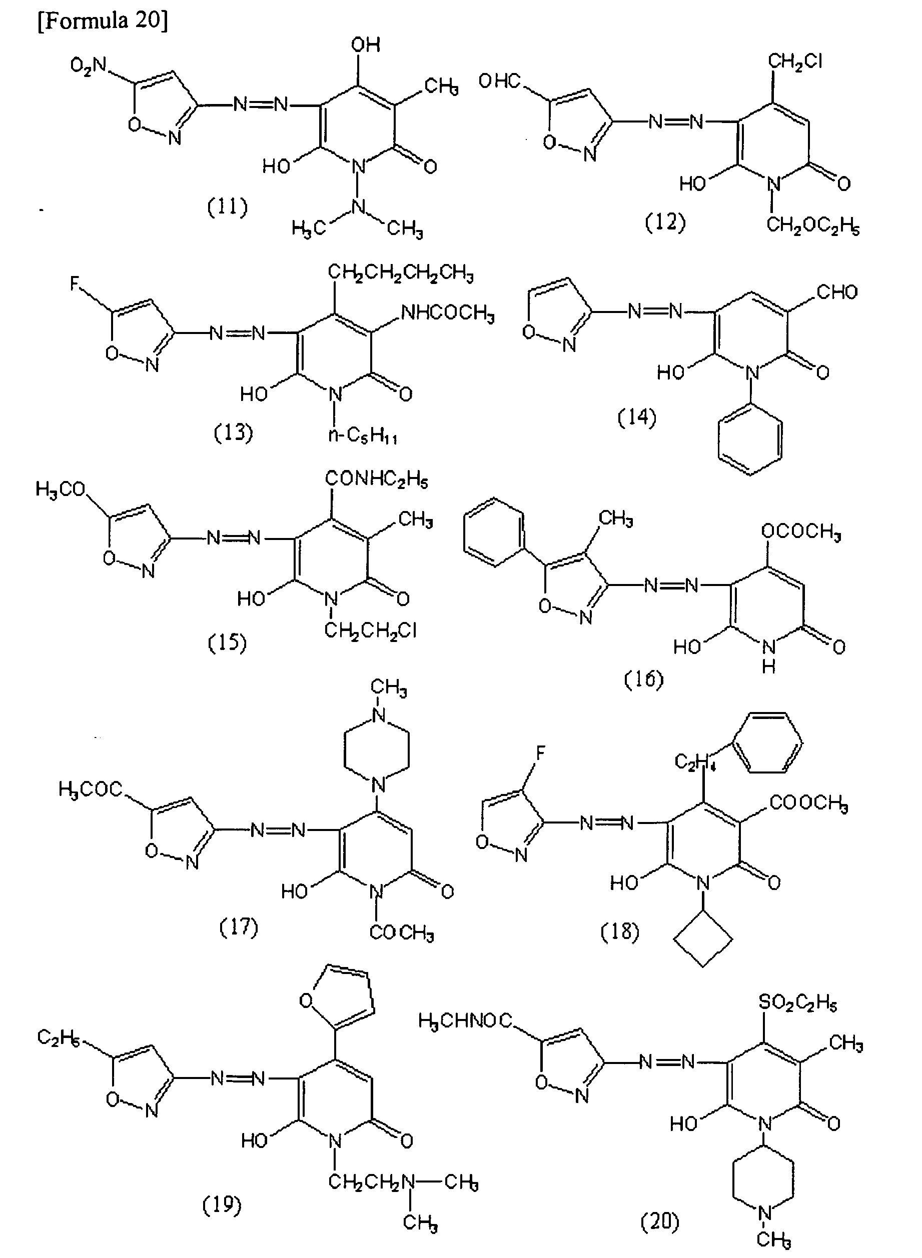

The pyridone azo compounds represented by the general formula [II] include, for example, the compounds (21) to (30) given below.

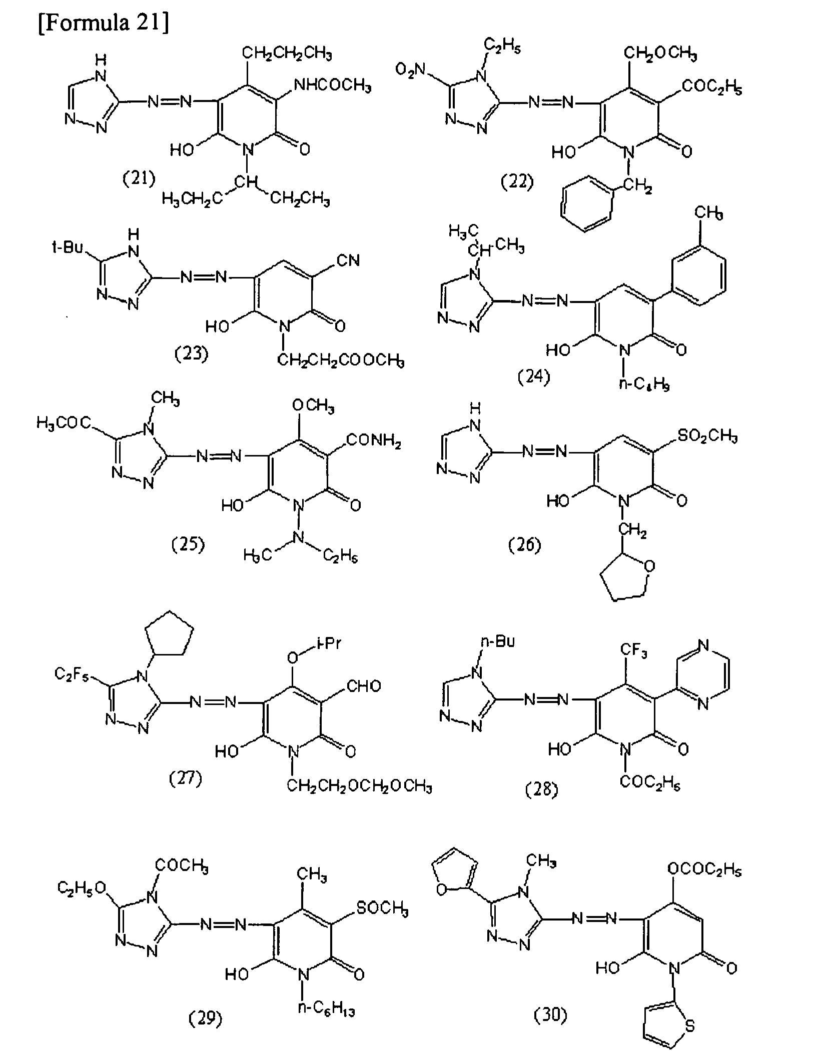

The pyridone azo compounds represented by the general formula [III] include, for example, the compounds (31) to (40) given below.

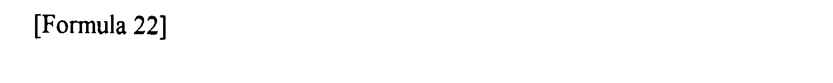

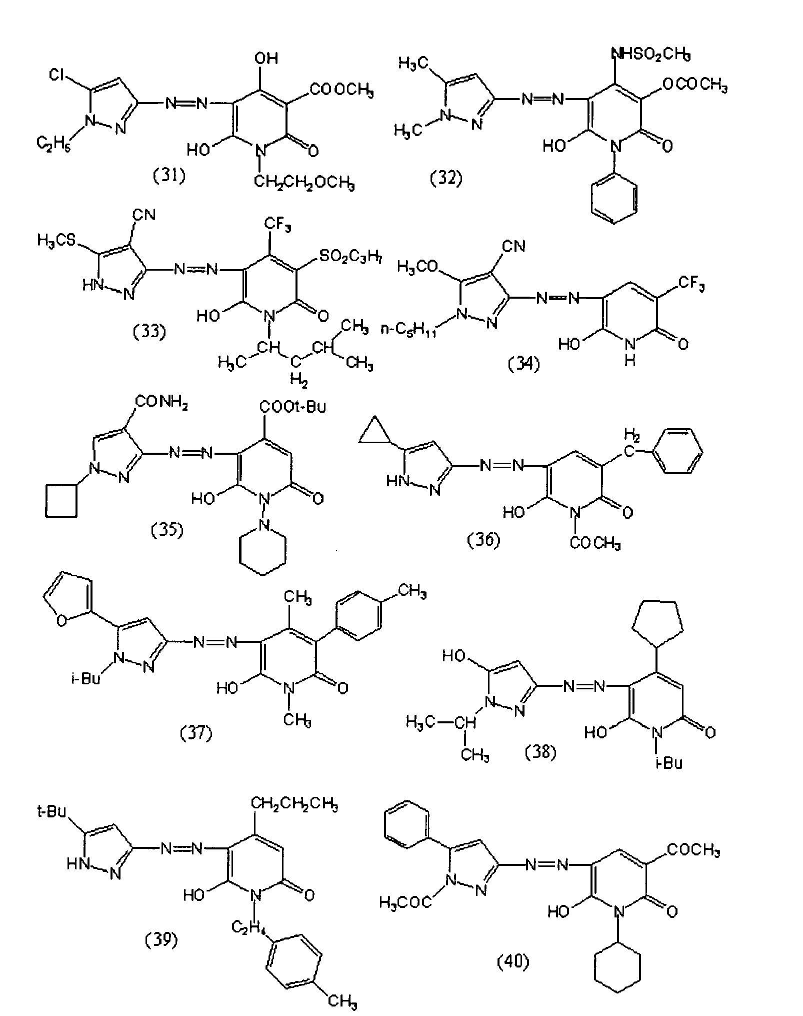

Further, the pyridone azo compounds represented by the general formulas [I] to [III] include, for example, the compounds (41) to (57) given below.

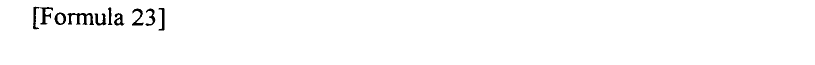

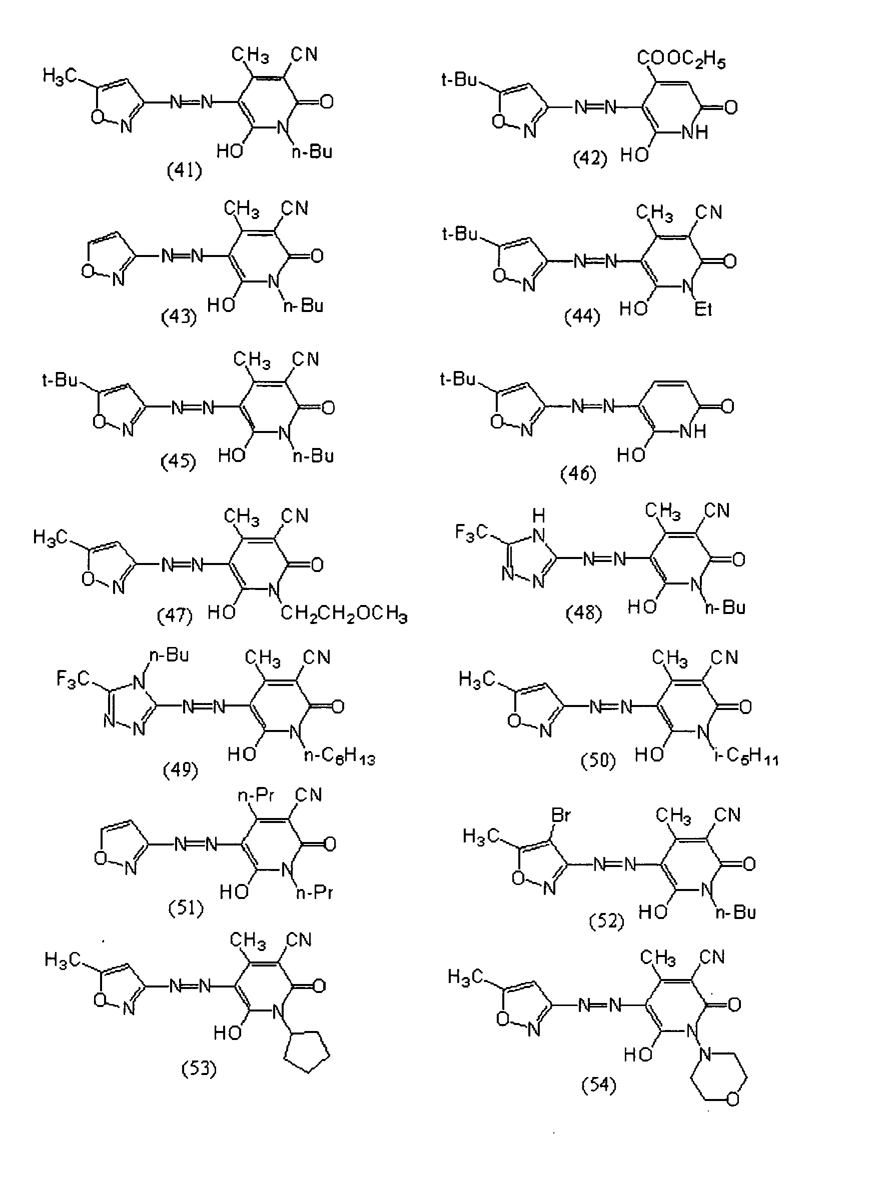

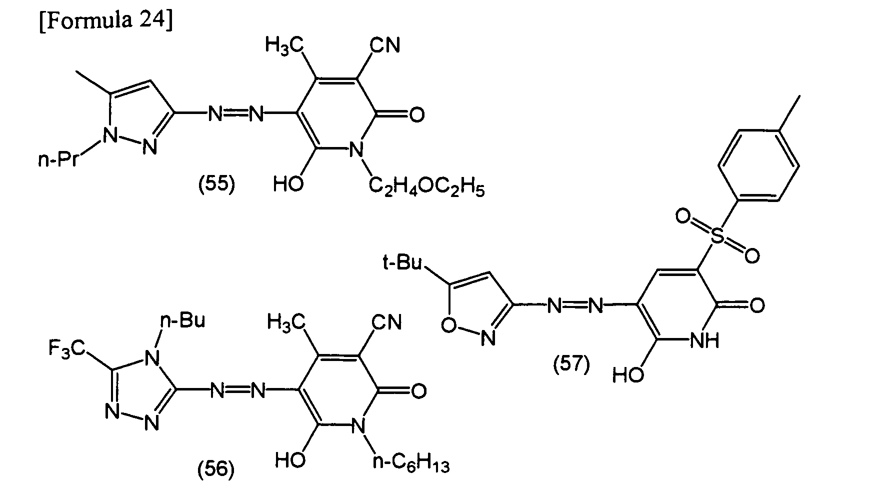

### (Optical recording medium)

The optical recording medium applicable to the present exemplary embodiment is next described.
The optical recording medium applicable to the present exemplary embodiment is composed of at least a substrate and a recording layer containing the metal complex compound of the pyridone azo compound represented by the general formulas [I] to [III]. An undercoat layer, a reflective layer, a protective layer and the like may be further provided as needed.

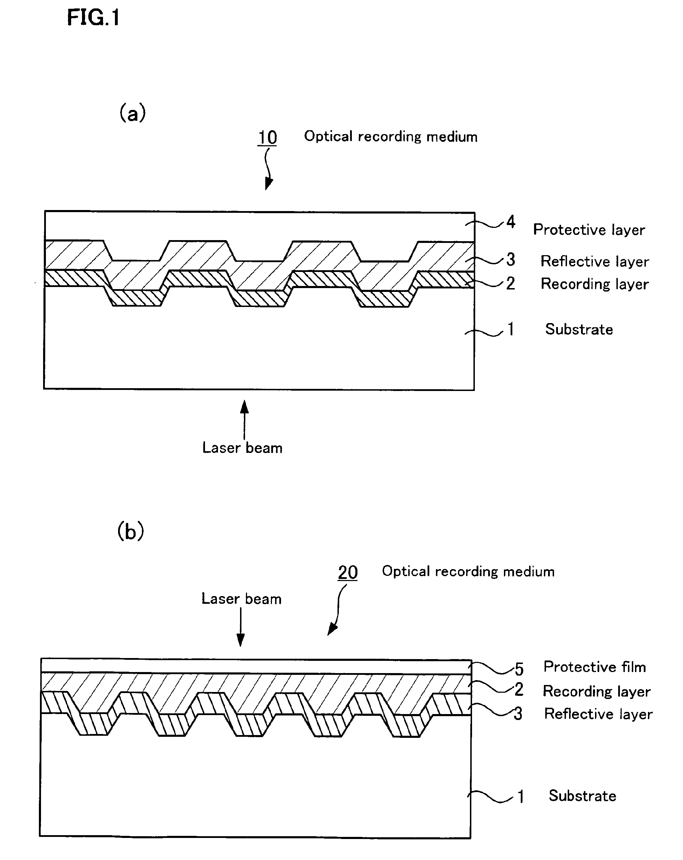

FIGs. 1(a) and 1(b) are figures explaining optical recording medium which this exemplary embodiment is applied to, where FIG. 1(a) is a figure for first exemplary embodiment, and FIG. 1(b) is a figure for second exemplary embodiment.

### (First exemplary embodiment)

Optical recording medium 10 shown in FIG. 1(a) is laminated in turn with a substrate 1 composed of light transmitting material 1, recording layer 2 formed on substrate 1 and reflective layer 3 and protective layer 4 laminated on recording layer 2. Optical recording medium 10 is irradiated with a laser beam from the side of substrate 1 to record and read information.
In addition, in the optical recording medium 10, for convenience of the explanation, the side on which protective layer 4 is present and the side on which substrate 1 is present are referred to as upside and downside, respectively, and a face of each layer corresponding to these directions is referred to as the upper surface and the lower surface, respectively.

Various materials can be used as substrate 1 as far as the material is basically transparent at the wavelength of recording light and reading light. Specifically, they include, for example, resins such as acrylic type resins, methacrylic type resins, polycarbonate resins, polyolefin type resins (particularly amorphous polyolefin), polyester type resins, polystyrene resins, epoxy resins and the like; and glass. They also include a structure in which a resin layer composed of radiation curable resins such as a light curable resin and the like is formed on glass. Among them, polycarbonate resin used in an injection molding method is preferred in terms of high productivity, cost, moisture resistance and the like and amorphous polyolefins are preferred in terms of chemical resistance, moisture resistance and the like. Also, glass is preferred in terms of fast response and the like.

When resin substrate 1 or a substrate 1 provided with a resin layer next to the recording layer (upside) is used, a guide groove or pits for writing and reading light may be formed on the upper surface. A shape of the guide groove includes a concentric pattern based on a center of optical recording medium 10 or a spiral pattern. When the spiral guide groove is formed, a groove pitch is preferably in the range of about 0.2 to 1.2 µm.

Recording layer 2 is formed directly on upside of substrate 1 or upside of an undercoat layer disposed on substrate 1 as needed and contains the metal complex compound of the pyridone azo compound represented by the general formulas [I] to [III]. A film forming method of recording layer 2 includes various methods generally used to form a thin film such as vacuum deposition method, sputtering method, doctor blade method, casting method, spin coating method, immersion coating method and the like. The spin coating method is preferred in terms of mass productivity and cost while the vacuum deposition method is more preferred than the coating method in terms of acquiring recording layer 2 with a uniform thickness. When the spin coating method is used to form a film, the number of revolution is preferably 500 to 15000 rpm. After spin coating, the recording layer may be treated such as heating or exposing to a solvent vapor, depending on circumstances.

When recording layer 2 is formed by a coating method such as a doctor blade method, casting method, spin coating method or immersion coating method, a coating solvent used to dissolve the metal complex compound of the pyridone azo compound represented by the general formulas [I] to [III] and coat substrate 1 is not particularly limited as far as it does not erode substrate 1.
Specifically it includes, for example, ketone alcohol solvents such as diacetone alcohol, 3-hydroxy-3-methyl-2-butanone and the like; cellosolve solvents such as methylcellosolve, ethylcellosolve and the like; linear hydrocarbon solvents such as n-hexane, n-octane and the like; cyclic hydrocarbon solvents such as cyclohexane, methylcyclohexane, ethylcyclohexane, dimethylcyclohexane, n-butylcyclohexane, tert-butylcyclohexane, cyclooctane and the like; perfluoroalkyl alcohol solvents such as tetrafluoropropanol, octafluoropentanol, hexafluorobutanol and the like; hydroxycarboxylate ester solvents such as methyl lactate, ethyl lactate, methyl 2-hydroxyisobutyrate and the like; and others.

When the vacuum deposition method is used, for example, the compound represented by the general formulas and as needed, a recording layer component such as other dyes or various additives are added to a crucible placed in a vacuum vessel, which is evacuated to a level of about 10⁻² to 10⁻⁵ Pa by a proper vacuum pump and then the crucible is heated to vaporize the recording layer component to deposit onto the substrate facing the crucible to form recording layer 2.

Also, recording layer 2 may contain, in addition to the metal complex compound of the pyridone azo compound represented by the general formulas [I] to [III], a transition metal chelate compound as a singlet oxygen quencher (for example, acetylacetonate chelate, bisphenyldithiol, salicylaldehydeoxime, bisdithio-α-diketone and the like) in order to improve stability and light stability or also may concern a recording sensitivity improver of metal type compounds and the like in order to increase recording sensitivity.
The metal type compounds herein are the compound, in which a metal such as a transition metal and the like is contained in a form of an atom, ion, cluster and the like and include organic metal compounds, for example, ethylenediamine type complex, azomethine type complex, phenylhydroxyamine type complex, phenanthroline type complex, dihydroxyazobenzene type complex, dioxime type complex, nitrosoaminophenol type complex, pyridyltriazine type complex, acetylacetonate type complex, metallocene type complex and porphyrin type complex. The metal atom is not particularly limited, but is preferably a transition metal atom.

In addition, plural kinds of the metal complex compound of the pyridone azo compounds represented by the general formulas [I] to [III] may be used in combination for recording layer 2 as needed. Further, for recording layer 2, there may be used other type of dyes as needed in addition to the metal complex compound of the pyridone azo compound.
Other type dye is not particularly limited as far as it has mainly proper absorption in the oscillation wavelength region of a laser beam for writing. A dye used in CD-R and the like suitable to record and read by a near-infrared laser beam with an oscillation wavelength in the wavelength region of 770 nm to 830 nm or a dye used in DVD-R and the like suitable to record and read by a red laser beam with an oscillation wavelength in the wavelength region of 620 nm to 690 nm may also be used in combination with the pyridone azo compound in recording layer 2 to manufacture optical recording medium 10 responding to plural kinds of laser beam belonging to different wavelength regions. Also, a dye having a good light stability is chosen from the above dyes for CD-R or DVD-R and mixed with the compound of the present invention to enable further improvement of light stability.

A type of the dyes other than metal complex compounds of the pyridone azo compounds represented by the general formulas [I] to [III] includes, for example, metal-containing azo type dye, benzophenone type dye, phthalocyanine type dye, naphthalocyanine type dye, cyanine type dye, azo type dye, sqarylium type dye, metal-containing indoaniline type dye, triarylmethane type dye, merocyanine type dye, azulenium type dye, naphthoquinone type dye, anthraquinone type dye, indophenol type dye, xanthene type dye, oxazine type dye, pyrilium type dye and the like.

Further, a binder, a leveling agent, an antifoaming agent and the like may be used in combination as needed. Preferred binders include polyvinyl alcohol, polyvinylpyrrolidone, nitrocellulose, cellulose acetate, ketone type resin, acryl type resin, polystyrene type resin, urethane type resin, polyvinylbutyral, polycarbonate, polyolefin and the like.

Film thickness of recording layer 2 is not particularly limited because its proper thickness varies with a recording method and the like, but is generally at least 1 (one) nm or more, preferably 5 nm or more because a certain thickness is required for recording. However, its thickness is generally 300 nm or less, preferably 200 nm or less, more preferably 100 nm or less. When the film of recording layer 2 is excessively thick, good recording could not be achieved.

Reflective layer 3 is formed on recording layer 2. Thickness of reflective layer 3 is preferably 50 nm to 300 nm. A material for reflective layer 3 uses a material with sufficiently high reflectance at wavelength of reading light, for example, a metal such as Au, Al, Ag, Cu, Ti, Cr, Ni, Pt, Ta, Pd and the like singly or as an alloy. Among them, Au, Al, Ag and Cu have high reflectance and are suitable as a material of reflective layer 3. These metals may be used as a major component, to which other material may be added. A major component herein indicates the one with a content 50% or higher. Materials other than the major component include metals and semimetals, for example, Mg, Se, Hf, V, Nb, Ru, W, Mn, Re, Fe, Co, Rh, Ir, Cu, Zn, Cd, Ga, In, Si, Ge, Te, Pb, Po, Sn, Bi, Ta, Ti, Pt, Pd, Nd and the like.

Among these metals and semimetals, a material having Ag as a major component is particularly preferred because of low cost, ease to obtain high reflectance and formation of beautiful white ground color when forming ink accepting layer for print described hereinafter. For example, an alloy containing more than one kind of metals selected from Au, Pd, Pt, Cu and Nd in a range of about 0.1 atom% to 5 atom% in Ag is preferred because of high reflectance, high durability, high sensitivity and low cost. Specifically they are an Ag-Pd-Cu alloy, an Ag-Cu-Au alloy, an Ag-Cu-Au-Nd alloy, an Ag-Cu-Nd alloy and the like. A material other than metals may be formed by alternate deposition of a low refractive index thin film and a high refractive index film to yield a multilayer film, which can be used as reflective layer 3.

A method to form reflective layer 3 includes, for example, sputtering method, ion plating method, chemical deposition method, vacuum deposition method and the like. Also, known inorganic or organic intermediate layer and adhesive layer may be disposed on substrate 1 or beneath reflective layer 3 in order to increase reflectance, improve recording characteristics and increase adhesiveness, and others.

Protective layer 4 is formed on reflective layer 3. A material for protective layer 4 is not particularly limited as far as it can protect reflective layer 3 from external force. Materials of organic substances include thermoplastic resins, thermosetting resins, electron beam curable resins, UV curable resins and the like. Also, inorganic substances include silicon oxide, silicon nitride, MgF₂, SnO₂ and the like.

When thermoplastic resins, thermosetting resins and the like are used, they are dissolved in a proper solvent to prepare a coating solution, which is applied to reflective layer 3 and then dried to form protective layer 4. When a UV curable resin is used, it may be applied as it is to reflective layer 3 or dissolved in a proper solvent to prepare a coating solution, which is applied to reflective layer 3 and then irradiated with UV light to cure to form protective layer 4.

For example, acrylate type resins such as urethane acrylate, epoxy acrylate, polyester acrylate and the like can be used as the UV curable resin. These materials may be used singly or as a mixture of plural kinds. The protective layer may be formed of a monolayer or plural layers.

A method to form protective layer 4 uses, similarly to formation of recording layer 2, a coating method such as spin coating method, casting method and the like, sputtering method, chemical deposition method and the like, but among them a spin coating method is preferred. Thickness of the protective layer 4 is generally 0.1 µm or more, preferably 3 µm or more because a certain thickness is required to perform protective function. However, its thickness is generally 100 µm or less, preferably 30 µm or less. When the film of protective layer 4 is excessively thick, not only effectiveness changes little but also a longer period is required to form protective layer 4, and also cost could be higher.

As described above, a structure formed by lamination of substrate 1, recording layer 2, reflective layer 3 and protective layer 4 in this order is used as illustrative example for the structure of optical recording medium 10, but other layer structure may be used.

For example, other substrate 1 may be laminated on the upper surface of protective layer 4 of the layer structure of the above example or on the upper surface of reflective layer 3 after omitting protective layer 4 from the layer structure of the above example. Substrate 1 in this case may be the substrate itself without having any layer or the one having any layer such as reflective layer 3 and the like on the laminated surface or its opposing surface. Further, optical recording medium 10 having the layer structure of the above example or optical recording medium 10 omitting protective layer 4 from the layer structure of the above example is made to face the upper face of protective layer 4 and/or reflective layer 3, to each other and laminated.

### (Second exemplary embodiment)

Second exemplary embodiment of the optical recoding medium is next described.
FIG. 1(B) is a figure to describe second exemplary embodiment of the optical recording medium. Common parts with optical recording medium 10 in first exemplary embodiment are given the same reference letters and their explanation is omitted.
Optical recording medium 20 shown in FIG. 1(B) is laminated with a substrate 1 composed of a light transmitting material, reflective layer 3 provided on substrate 1, recording layer 2 laminated on reflective layer 3 and protective film 5 in this order. Optical recording medium 20 is irradiated with a laser beam from a side of protective film 5 to record and read information.

Protective film 5 may be laminated with a film or sheet-like material by an adhesive or formed using a similar material to above protective layer 4, to which a coating liquid for film formation is applied, cured and dried. Thickness of protective film 5 is generally 0.1 µm or more, preferably 3 µm or more since a certain thickness is required to serve protective function. However, thickness is generally 300 µm or less, preferably 200 µm or less. When the protective film 5 is excessively thick, not only effectiveness changes little but also a longer period is required to form protective film 5 and cost could be higher.

Each layer of recording layer 2, reflective layer 3 and the like may use materials similar to the above optical recording medium 10. However, the substrate 1 with the composition of these layers may not necessarily be transparent but opaque resins, ceramics, metals (including alloys) and the like may be used in addition to the above materials. An arbitrary layer may be present between each of the layers as needed so far as features of the present invention are not impaired.

By the way, one way to increase the recording density of optical recording medium 10 and 20 includes increasing a numerical aperture of the objective lens. This can make optical spots focused onto the information recording surface smaller. However, as the numerical aperture of the objective lens is increased, irradiation with a laser beam for writing and reading is likely to cause an increase of aberration of the optical spots due to warping and the like of optical recording medium 10 and 20, resulting in difficulty to obtain good record and read signals with high stability.

Since aberration is likely to be larger as the film thickness of the transparent substrate and the protective film through which a laser beam is transmitted becomes larger, the substrate and protective film are made preferably as thin as possible in order to make the aberration smaller. However, because substrate 1 needs a certain thickness to secure the strength of optical recording medium 10 and 20, in this case, use of the structure of optical recording medium 20 (optical recording medium 20 with the basic layer structure composed of substrate 1, reflective layer 3, recording layer 2 and protective film 5) is preferred. Since thinning of protective film 5 in optical recording medium 20 is easier than thinning of substrate 1 in optical recording medium 10, optical recording medium 20 is preferably used.

However, even in the structure of optical recording medium 10 (optical recording medium 10 with the basic layer structure composed of substrate 1, recording layer 2, reflective layer 3 and protective layer 4), the transparent substrate1, through which a laser beam for writing and reading is transmitted, may be thinned to a range of about 50 µm to 300 µm to make aberration smaller for use.

Further, after formation of each other layer, a film such as ultraviolet curing resin layer, inorganic type thin film and the like may be formed on a plane of incidence of a laser beam for writing and reading (generally a lower surface of substrate 1) in order to protect the surface or prevent dirt and the like from adhering and an ink accepting layer, on which writing and printing are made possible using various printers such as ink jet printer or thermal transfer printer or various writing utensils may be formed on the surface, which is not a plane of incidence of a laser beam for writing and reading (generally an upper surface of reflective layer 3 or protective layer 4).

In optical recording media 10 and 20 applicable to the present exemplary embodiment, shorter wavelength of a laser beam used in writing and reading information is preferable in terms of achieving a higher recording density, and a laser beam at wavelength of 350 nm to 530 nm is particularly preferred. A typical example of such laser beam includes a laser beam with center wavelength at 405 nm, 410 nm and 515 nm.

A laser beam at wavelength of 350 nm to 530 nm can be obtained using a high power blue semiconductor laser beam at wavelength of 405 nm and 410 nm or blue green high power semiconductor laser beam at wavelength of 515 nm. It can be also obtained as others, for example, by converting wavelength, with a second harmonic generation element (SHG), of an oscillated laser beam either (a) from a semiconductor laser beam capable of continuous oscillation with a fundamental oscillation wavelength at wavelength of 740 nm to 960 nm or (b) a solid laser beam capable of continuous oscillation with a fundamental oscillation wavelength at 740 nm to 960 nm excited by a semiconductor laser beam.

In addition, SHG may be any piezoelements lacking inversion symmetry, but preferably compound semiconductors such as KDP, ADP, BNN, KN and LBO. Specific examples of the second harmonic wave include a laser beam at 430 nm corresponding to a double wave of the fundamental oscillation wavelength in a semiconductor laser beam with the fundamental oscillation wavelength at 860 nm or a laser beam at 430 nm corresponding to a double wave from LiSrAlF₆ crystals doped with Cr (fundamental oscillation wavelength at wavelength of 860 nm) in a solid laser beam excited by a semiconductor laser beam.

When information is recorded on optical recording media 10 and 20 applicable to the present exemplary embodiment, recording layer 2 is irradiated with a laser beam focused to a level of about 0.4 µm to 0.6 µm (generally beam transmitting through substrate 1 from the side of substrate 1). The spot of recording layer 2 where laser beam is irradiated absorbs energy of the laser beam to cause thermal deformation such as decomposition, heat generation, dissolution and the like to change optical properties.

When information recorded on recording layer 2 is read, the same recording layer 2 is irradiated with a laser beam with lower energy (generally from the same direction as recording). In recording layer 2, the information is reproduced by detecting difference of the reflectance between the spots with a change of optical properties (that is, a section recorded with information) and the spots without a change of oprical properties.

### [Examples]

The present exemplary embodiment is specifically described based on the examples below. The present exemplary embodiment is not limited to these examples as far as it does not exceed a scope of the invention.

### (Synthetic method of pyridone azo compound)

A synthetic method of the pyridone azo compound represented by the above general formulas [I] to [III] is not particularly limited and a general synthetic method, for example, for a 6-hydroxy-2-pyridone structure is described below.
(1) Condensation of cyanoacetamide derivative with β-ketoester
A most common synthetic method known is, as given below, to heat in the presence of a base catalyst a cyanoacetamide derivative with a β-ketoester (J. Heterocyclic Chem., 32, 979 (1995) and the like) or ethyl cyanoacetate with a β-ketoester (Dyes & Pigments, 15, 69 (1991)) to synthesize 3-cyano-6-hydroxy-2-pyridone. Changing R₁ in the amino group in the cyanoacetamide derivative herein allows introduction of a substituent at R₁ and changing R₃ in the β-ketoester also allows introduction of a substituent.

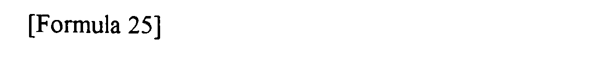

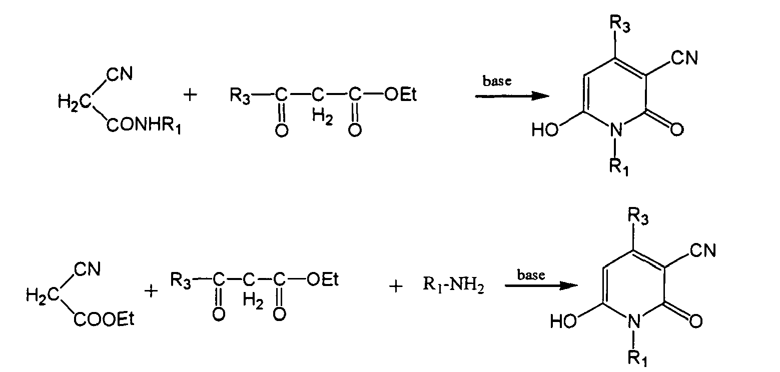

(2) Condensation of 1,3-dimethyluracil with malonamide derivative
Use of 1,3-dimetyluracil and a malonamide derivative allows synthesis of a 3-substituted-2,6-dihydrooypyridine as given below (J. Am. Chem. Soc., 101 (15), 4423 (1979)).

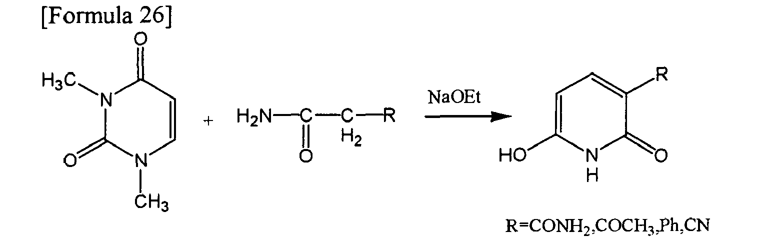

(3) Michael addition of phenylpropiolic acid
Reaction of N-allylphenyl-propionic acid amide with diethyl oxalate also allows synthesis of a 6-hydroxy-2-pyridone derivative as given below (Yakugakuzasshi, 99 (6), 588 (1979)).

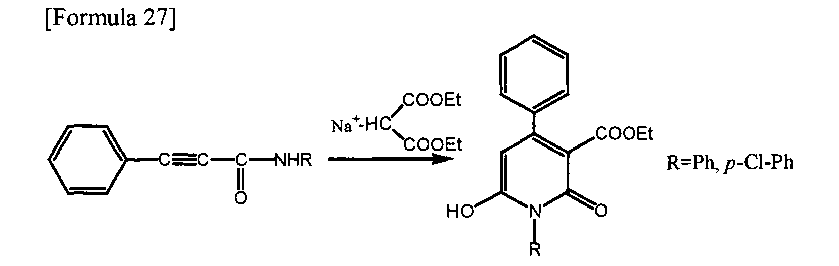

A substituent may be introduced by using a commercial chemical of a compound having a 2,6-dihydroxypyridine structure as a starting material.
A diazotized heteroaromatic amine may be coupled with the 6-hydroxy-2-pyridone compound thus obtained to yield the pyridone azo compound represented by the above general formulas [I] to [III]. Such pyridone azo compound is complexed with a metal to yield the metal-containing pyridone azo compound (a metal complex compound of pyridone azo compound).

### (Example 1)

### (a) Synthetic example

### (a-1)

In 20 ml of ethanol, 22.63 g (0.2 mol) of ethyl cyanoacetate represented by the following structural formula [1], 26.03 g (0.2 mol) of ethyl 3-oxobutanoate represented by structural formula [2] and 14.63 g (0.2 mol) of n-butylamine represented by structural formula [3] were dissolved, to which 6 ml of piperidine was added dropwise and then the mixture was refluxed with stirring for 26.5 hours. After cooling, the reaction mixture was poured into 200 ml of 10% hydrochloric acid, which was stirred to precipitate solids. The solids separated were collected by filtration, washed with water, then suspended in 100 ml of hexane, stirred for about 30 minutes and then filtered to collect precipitates, which were heated under vacuum to dryness to yield 11.3 g (yield: 27.4%) of the following compound [4] (1-n-butyl-3-cyano-4-methyl-6-hydroxy-2-pyridone).

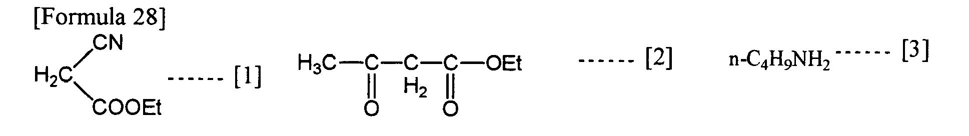

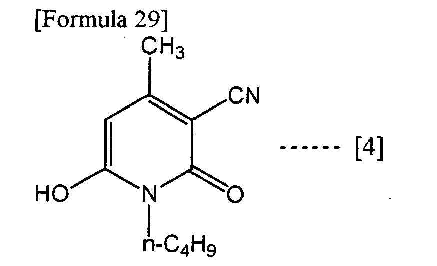

In a solution of 30 ml of acetic acid, 10 ml of propionic acid and 2 ml of concentrated sulfuric acid, 2.94 g (0.03 mol) of 3-amino-5-methylisoxazole represented by the following structural formula (5) were dissolved with stirring and then the resultant solution was chilled to 0 to 5°C. Here 10.62 g of 43% nitrosyl sulfuric acid was added dropwise to the mixture while keeping the temperature at 10°C or less to diazotize to prepare a diazotized solution.

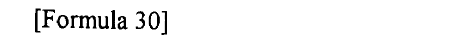

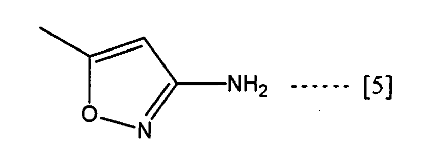

On the other hand, 6.8 g (0.033 mol) of the compound [4], 9 g of sodium acetate and 1.2 g of urea were dissolved with stirring in 100 ml of methanol and 20 ml of water in a separate vessel, to which hydrochloric acid is added to adjust pH to 5 and then chilled to 0 to 5 °C. To this solution was added dropwise a diazotized solution prepared in advance at 5 °C or less while maintaining pH at 4 to 5 with a 14% aqueous ammonia. After completing the dropwise addition, the reaction mixture was stirred for 30 minutes and filtered. Precipitate collected was suspended in 500 ml of water in order to remove inorganic salts, stirred for about 30 minutes and filtered. The precipitate collected was suspended in 200 ml of methanol, stirred and filtered to collect the solid, which was heated under vacuum to dryness to yield 7.74 g (yield: 81.8%) of the compound represented by the exemplary compound (41). Mass spectrometry measurement of this compound was performed to confirm a peak at m/z = 315.

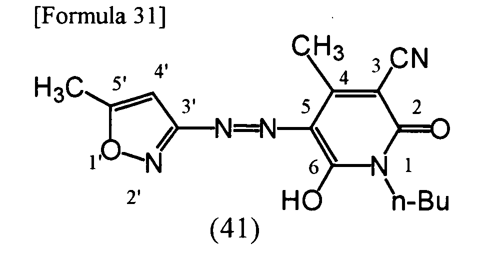

### (a-2) Results of NMR

Also, ¹H-NMR of this compound (CDCl₃ (δ = ppm), 270 MHz) was measured to show peaks at 0.96 (3H, t, N-CH₂CH₂CH₂CH₃), 1.37 (2H, sextet, N-CH₂CH₂CH₂CH₃), 1.59 (2H, m, N-CH₂CH₂CH₂CH₃), 2.48 (3H, s, 5'-CH₃), 2.55 (3H, s, 4-CH₃), 3.96 (2H, t, N-CH₂CH₂CH₂CH₃) and 6.3 (1H, s, 4'-H), corresponding to the target compound.
This exemplary compound (41) in chloroform had λₘₐₓ = 391 nm and the molar absorption coefficient of 3.5 × 10⁴.

In 100 ml of tetrahydrofuran, 3.78 g (0.012 mol) of exemplary compound (41) was dissolved with stirring, and the resultant solution was filtered by avoiding contamination with insoluble matter and a solution of 1.79 g (0.0072 mol) of nickel acetate in 27 ml of methanol was added dropwise to the filtrate. The reaction solution was stirred for 1 hour, to which 500 ml of isopropyl ether was then added to precipitate and filter solids. The precipitate collected was suspended in 100 ml of water, stirred for about 30 minutes and then filtered. The precipitate collected is washed with isopropyl ether, heated under vacuum to dryness to yield 2.91 g (yield: 70.6%) of the metal-containing pyridone azo compound represented by the following structural formula [6] (referred to as metal complex compound (58)). This compound in chloroform had λₘₐₓ = 435.5 nm and the molar absorption coefficient of 5.6×10⁴.

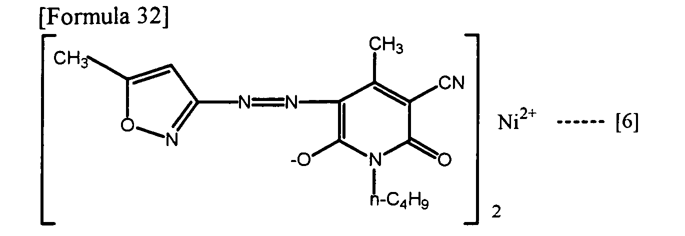

(b) Evaluation of optical recording medium
Metal complex compound (58) (metal-containing pyridone azo compound represented by structural formula [6]) was dissolved in octafluoropentanol to prepare a solution with the concentration of 1 wt%. This solution was filtered to prepare a dissolved solution, which was dropped to apply by a spin coating method (500 rpm) on an injection molded polycarbonate resin substrate with a diameter of 120 mm and a thickness of 1.2 mm and then dried at 100°C for 30 minutes. The coated film had the maximum absorption wavelength (λₘₐₓ) at 442.5 nm.

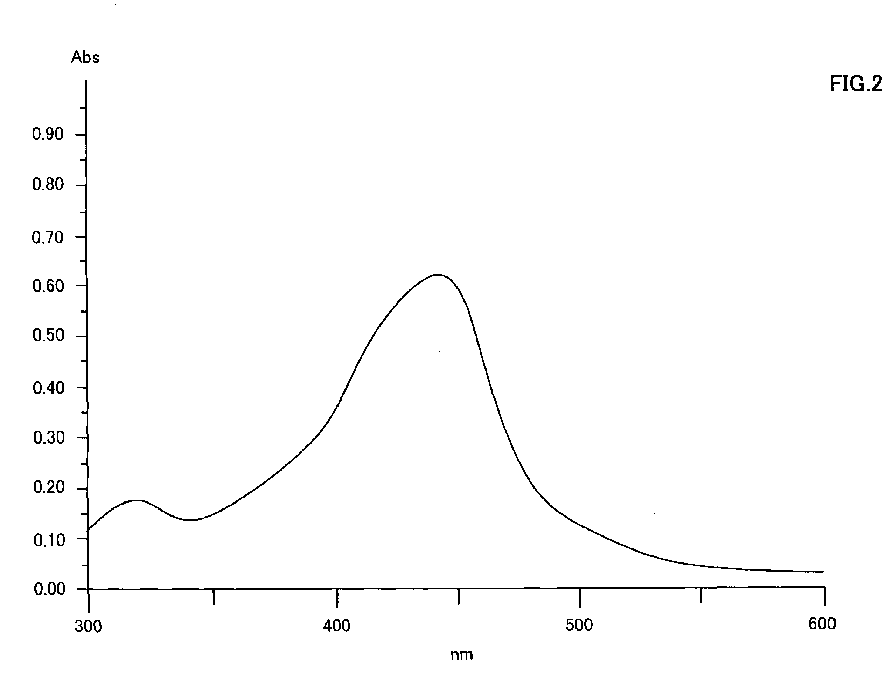

FIG. 2 shows an absorption spectrum of the coated film of metal complex compound (58).

A fragment of the disc coated with metal complex compound (58) was irradiated with a Xe lamp with 550 mW at 63 °C for 40 hours using a fade meter (Toyo Seiki Seisaku-Sho Ltd., Suntest XLS+). Then, a UV spectrometer was used to measure the absorbance (I₀) at λₘₐₓ before irradiation with the Xe lamp and the absorbance [I] at λₘₐₓ after irradiation with the Xe lamp, respectively. Then, a ratio of I to I₀ (I/I₀) (%) was determined to evaluate light stability (the larger the value, the better the light stability).
As a result, light stability ((I/I₀) (%)) of metal complex compound (58) was 63.2%, indicating very good light stability for a dye film showing the maximum absorption wavelength (λₘₐₓ) at 500 nm or less.

A substrate separately coated with metal complex compound (58) was kept in a constant temperature and humidity bath under a condition of 85 °C and a relative humidity of 85% for 200 hours. An absorption spectrum of the substrate was then measured and compared with the absorbance before set in the constant temperature and humidity bath (at the same λₘₐₓ wavelength as the one before test) to evaluate shelf-life stability. As a result, its value was 97.3%, indicating excellent stability.

A reflective layer such as Ag and the like is, as needed, formed by a sputtering method on the coated film thus formed and an ultraviolet curing resin is further applied by a spin coating and the like to the reflective layer and then irradiated with UV light to cure to form a protective layer, yielding the optical recording medium. A value of λₘₐₓ of the coated film allows such optical recording medium to record and read, for example, with a semiconductor laser beam with a center wavelength of 405 nm. That is, it is found that the metal-containing pyridone azo compound of metal complex compound (58) has a structure effective for recording with a blue laser beam.

Further, the optical recording medium was prepared as below.
The above metal complex compound (58) was dissolved in octafluoropentanol to prepare a solution with the concentration of 1.4 wt%. This solution was filtered to prepare a dissolved solution, which was dropped to apply by a spin coating method on an injection molded polycarbonate resin substrate with a diameter of 120 mm and a thickness of 0.6 mm having a track pitch of 400 nm, a groove width of 200 nm and a groove depth of 70 nm. Coating was carried out by increasing the number of revolution from 600 rpm to 4900 rpm over 25 seconds and keeping it at 4900 rpm for 5 seconds. The coated substrate was further dried at 100 °C for 30 minutes to form a recording layer.
A sliver alloy was then sputtered to form a deposition film with a thickness of 100 nm as a reflective layer. A protective coating agent composed of a UV curable resin was then applied by a spin coating method and irradiated with UV light to form a protective layer with thickness of 5 µm. A polycarbonate substrate with a thickness of 0.6 mm was further adhered to the protective layer surface using a delayed curing adhesive to prepare an optical recording medium for evaluation.

(c) Writing example
The above optical recording medium for evaluation was spun at a linear velocity of 6.61 m/sec, on the groove of which the single frequency signal of 8 T mark/8T space was written with a laser beam at the wavelength of 405 nm (numerical aperture of the objective lens NA = 0.65). Here, T is a reference clock cycle corresponding to the frequency of 65 MHz. The following recording pulse strategy was used: the number of partition pulse of (n-1) with a mark length of nT, a first recording pulse width of 2T, a subsequent recording pulse width of 0.6 T, a bias power of 1.5 mW, a read power of 0.4 mW and a variable recording power. As a result, a signal with a modulation depth of 51% was recorded at 7 mW. The modulation depth is considered to increase further by optimization of recording conditions such as the pulse strategy and the like.

### (Example 2)

### (a) Manufacturing example

In 500 ml of ethanol, 18.6 g of the following citrazinic acid [7] was suspended, to which 27 ml of concentrated sulfuric acid was added dropwise with stirring at room temperature and then refluxed for 4 hours. After cooling, the reaction mixture was poured into 1000 ml of water to precipitate solids. The precipitate was collected by filtration, washed with water and dried under vacuum to dryness to synthesize 14.88 g (yield: 67.7%) of following compound [8].

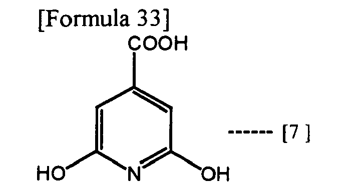

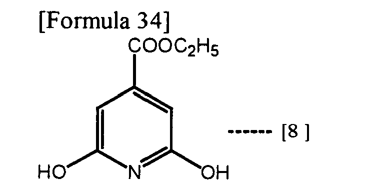

Next, 3.5 g (0.025 mol) of 3-amino-5-tert-butylisoxazole represented by the following structural formula [9] was dissolved with stirring in a solution of 25 ml of acetic acid, 8.3 ml of propionic acid and 1 ml of concentrated sulfuric acid and chilled to 0 to 5 °C. To this mixture was added dropwise 8.85 g of 43% nitrosyl sulfuric acid while maintaining the temperature at 10 °C or less to perform diazotization to prepare a diazotized solution.

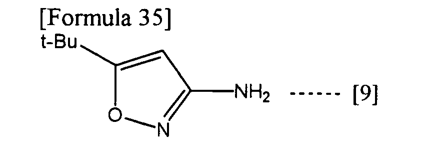

On the other hand, 4.81 g (1.05 equivalent) of the above compound [4], 7.5 g of sodium acetate and 1 g of urea weresuspended in 100 ml of methanol and 25 ml of water in a separate vessel, to which hydrochloric acid is added to adjust pH to 5 and then chilled to 0 to 5°C. To this solution was added dropwise the diazotized solution at 5 °C or less prepared in advance while maintaining pH at 4 to 5 with 14% aqueous ammonia. After completing the dropwise addition, the reaction mixture wasstirred for 30 minutes and filtered. The precipitate wassuspended in 500 ml of water to remove inorganic salts, stirred for about 30 minutes and filtered. The precipitate collected was then suspended in 1500 ml of methanol, stirred and filtered to collect the solid, which was heated under vacuum to dryness to yield 6.69 g (yield: 80%) of the above exemplary compound (42). Exemplary compound (42) in chloroform has λₘₐₓ = 379.5 nm and the molar absorption coefficient of 3.1×10⁴.

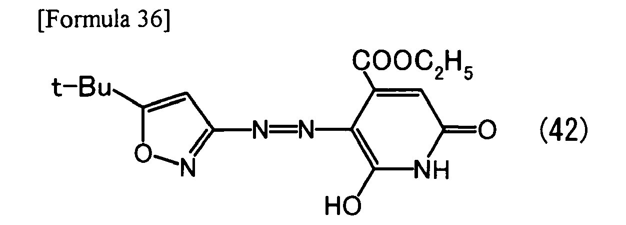

In 40 ml of tetrahydrofuran, 2.0 g (0.006 mol) of the compound represented by exemplary compound (42) was dissolved with stirring, filtered by avoiding contamination with insoluble matter and a solution of 0.9 g (0.0036 mol) of nickel acetate in 13 ml of methanol was added dropwise to the filtrate. The reaction mixture was stirred for 1 hour and transferred to a eggplant-shaped flask to evaporate the solvent by an evaporator to dryness. The solids obtained were suspended in 60 ml of water to remove unreacted nickel acetate, stirred and filtered. The precipitate collected was washed with isopropyl ether and heated under vacuum to dryness to yield 2.14 g (yield: 98.2%) of the metal-containing pyridone azo compound represented by the following structural formula [10] (referred to as metal complex compound (59)). This compound in chloroform has λₘₐₓ = 425 nm and the molar absorption coefficient of 4.0×10⁴.

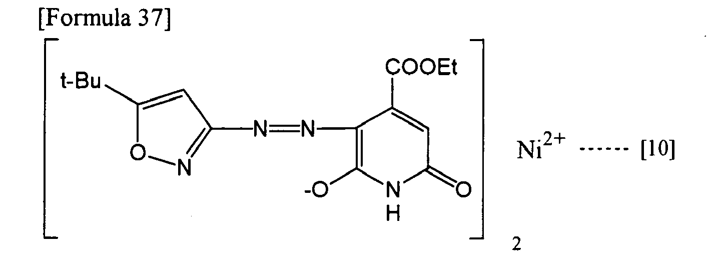

(b) Evaluation of optical recording medium
Metal complex compound (59) (metal-containing pyridone azo compound represented by structural formula [10]) was dissolved in octafluoropentanol to prepare a solution with the concentration of 1 wt%. This solution was filtered to prepare a dissolved solution, which was dropped to apply by a spin coating method on an injection molded polycarbonate resin substrate with a diameter of 120 mm and a thickness of 1.2 mm and then dried at 100 °C for 30 minutes. The coated film had the maximum absorption wavelength (λₘₐₓ) at 436.5 nm.

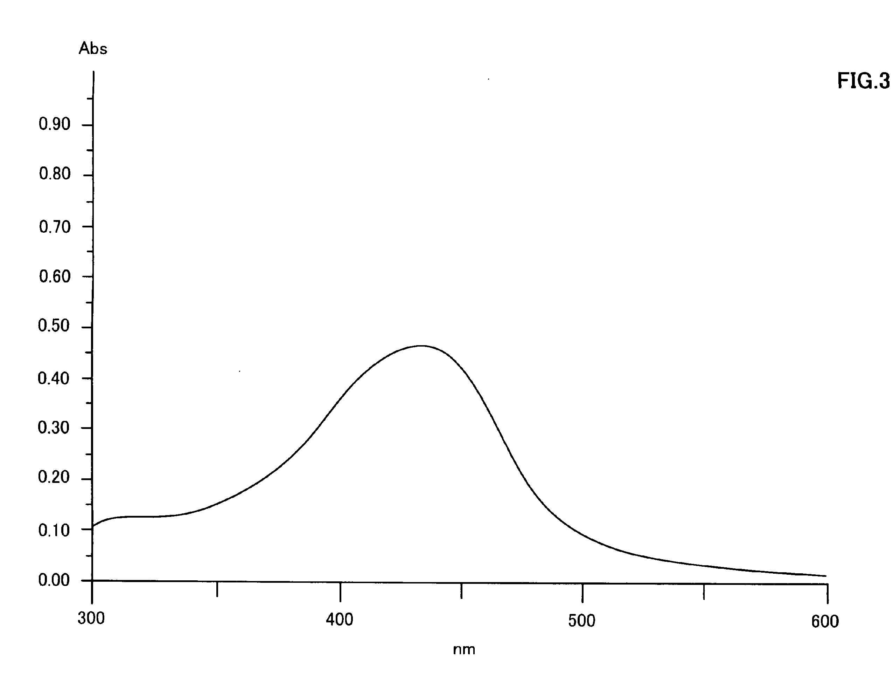

FIG. 3 shows an absorption spectrum of the coated film of metal complex compound (59).

Further, an optical recording medium was then prepared as follows.
A fragment of a disc coated with the dye was irradiated similarly to example 1 with a Xe lamp with 550 mW at 63 °C for 40 hours using a fade meter (Suntest XLS+, manuractured by Toyo Seiki Seisaku-Sho Ltd.) to evaluate light stability.
As a result, light stability of metal complex compound (59) of the metal-containing pyridone azo compound was 59%, indicating very good light stability as a dye film having the maximum absorption wavelength (λₘₐₓ) at 500 nm or less.
A substrate separately coated with metal complex compound (59) was kept similarly to example 1 in a constant temperature and humidity bath under the conditions of 85 °C and a relative humidity of 85% for 200 hours. An absorption spectrum of the substrate was then measured to evaluate the storage stability, which turns out to be 68.9%.

The above metal complex compound (59) was dissolved in tetrafluoropentanol to prepare a solution with the concentration of 0.9 wt%. This solution was filtered to prepare a dissolved solution, which was dropped to apply by a spin coating method on an injection molded polycarbonate resin substrate with a diameter of 120 mm and a thickness of 0.6 mm having a track pitch of 400 nm, a groove width of 200 nm and a groove depth of 70 nm. Coating was carried out by increasing the number of revolution from 600 rpm to 4900 rpm over 25 seconds and keeping it at 4900 rpm for 5 seconds. The coated substrate was further dried at 100°C for 30 minutes to form a recording layer. A sliver alloy was then sputtered to form a deposition film with a thickness of 100 nm as a reflective layer. A protective coating agent composed of a UV curable resin was then applied by a spin coating method and irradiated with UV light to form a protective layer with a thickness of 5 µm. A polycarbonate substrate with a thickness of 0.6 mm was further adhered to the protective layer surface using a delayed curing adhesive to prepare the optical recording medium for evaluation.

(c) Writing example
The above optical recording medium for evaluation was spun at a linear velocity of 6.61 m/sec, on the groove of which the single frequency signal of 8T mark/8T space was written using a laser beam at wavelength of 405 nm (numerical aperture of the objective lens NA = 0.65). T is a reference clock cycle corresponding to a frequency of 65 MHz. The following recording pulse strategy was used: the number of partition pulse of (n-1) with a mark length of nT, a first recording pulse width of 2T, a subsequent recording pulse width of 0.75 T, a bias power of 2.4 mW, a read power of 0.4 mW and a variable recording power. As a result, a signal with a modulation depth of 42% was recorded at 8 mW. The modulation depth was considered to increase further by optimization of recording conditions such as the pulse strategy and the like.

### (Examples 3 to 16)

In the following, using a similar method to the above synthetic method, metal complex compound (60) to metal complex compound (73) were synthesized and applied similarly to Example 1 to form a coated film, of which absorption spectra are measured. The maximum absorption wavelength (λₘₐₓ) of these compounds in a solution (chloroform), the molar absorption coefficient and the maximum absorption wavelength of the coated film (λₘₐₓ) (octafluoropentanol is used as a coating solvent) were measured.

### (Example 17)

### (a) Synthetic Example

Using similar reaction conditions as Example 1 as an amine, 2-ethoxyethylamine represented by the following structural formula [11] was used to prepare the compound represented by the following structural formula [12].

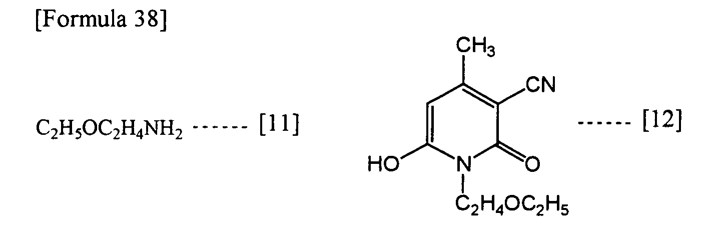

Next, 2.5 g (0.0258 mol) of 3-amino-5-methylpyrazole represented by the following structural formula [13] was dissolved in a solution of 75 ml of water and 12.5 g of concentrated hydrochloric acid with stirring and chilled to 0 °C to 5 °C. A solution of 1.96 g of sodium nitrite in 6 ml of water was added dropwise to the reaction mixture while keeping the temperature at 10 °C or less to perform diazotization.

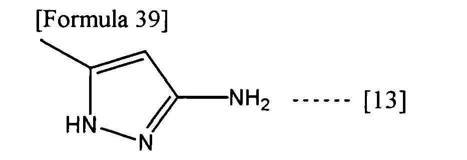

On the other hand, 5.21 g (0.0235 mol) of the compound represented by the above structural formula [12] and 1.0 g of urea were dissolved with stirring in 100 ml of methanol in a separate vessel and chilled to 0 to 5 °C. To this solution was added the above diazotized solution dropwise at 0 °C or less. After completion of the dropwise addition, the reaction mixture was stirred for 30 minutes and filtered. The solids collected were suspended in 500 ml of water to remove the inorganic salts, stirred for about 30 minutes and filtered to collect solids, which were heated under vacuum to dryness to yield 6.48 g (yield: 83%) of the compound represented by the following structural formula [14]. This compound in chloroform had λₘₐₓ = 423.5 nm and the molar absorption coefficient of 3.7×10⁴.

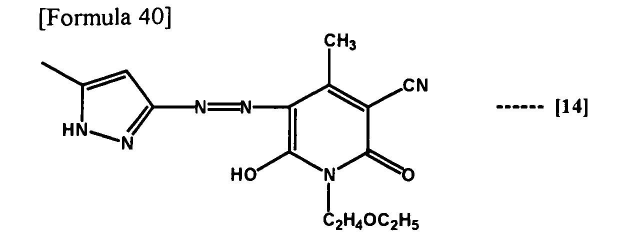

Subsequently, 1 g (0.003 mol) of the compound represented by the above structural formula [14] was dissolved in 40 ml of THF in a reaction vessel, which was chilled in an ice bath. To this solution were added 0.15 g (0.0036 mol) of sodium hydride (in oil, content of 60%) and 1.3 g (0.006 mol) of n-propyl p-toluenesulfonate represented by the following structural formula [15], and the resultant mixture was heated to 70 °C while stirring for 4.5 hours. Further, 0.3 g of sodium hydride and 2.6 g of n-propyl p-toluenesulfonate were added to the mixture to react for 2 hours and then the reaction solution was cooled. The reaction solution was poured into water, of which pH was adjusted to be neutral and filtered.

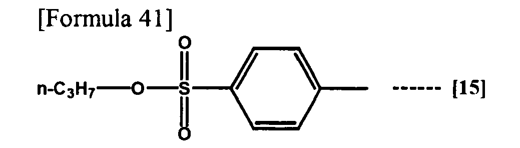

The product obtained was partially oily and dissolved in THF, from which a solvent was evaporated by an evaporator to yield a solid substance, which was washed with isopropyl ether, filtered and dried under vacuum to yield 0.79 g (yield: 63%) of the pyridone azo compound represented by exemplary compound (55).
The pyridone azo compound represented by exemplary compound (55) in chloroform had λₘₐₓ = 437 nm and the molar absorption coefficient of 4.4×10⁴.
The pyridone azo compound obtained and represented by exemplary compound (55) was used to synthesize a nickel complex similarly to the method in Example 1 to yield following compound [16] (referred to as metal complex compound (74)). The metal complex compound (74) in chloroform had λₘₐₓ = 466 nm and 492 nm and the molar absorption coefficient of 8.5×10⁴ and 8.5×10⁴, respectively.

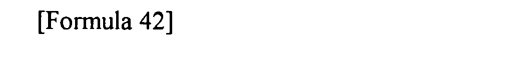

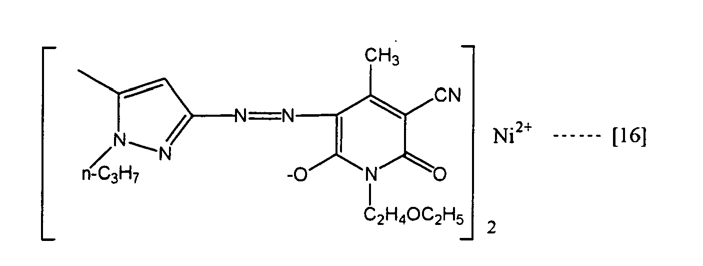

(b) Evaluation of optical recording medium
Metal complex compound (74) was dissolved in octafluoropentanol to prepare a solution with the concentration of 1 wt%. This solution was filtered to prepare a dissolved solution, which was dropped to apply by a spin coating method (500 rpm) on an injection molded polycarbonate resin substrate with a diameter of 120 mm and a thickness of 0.6 mm and then dried at 100 °C for 30 minutes. The coated film had the maximum absorption wavelength (λₘₐₓ) at 469.5, 500 nm.

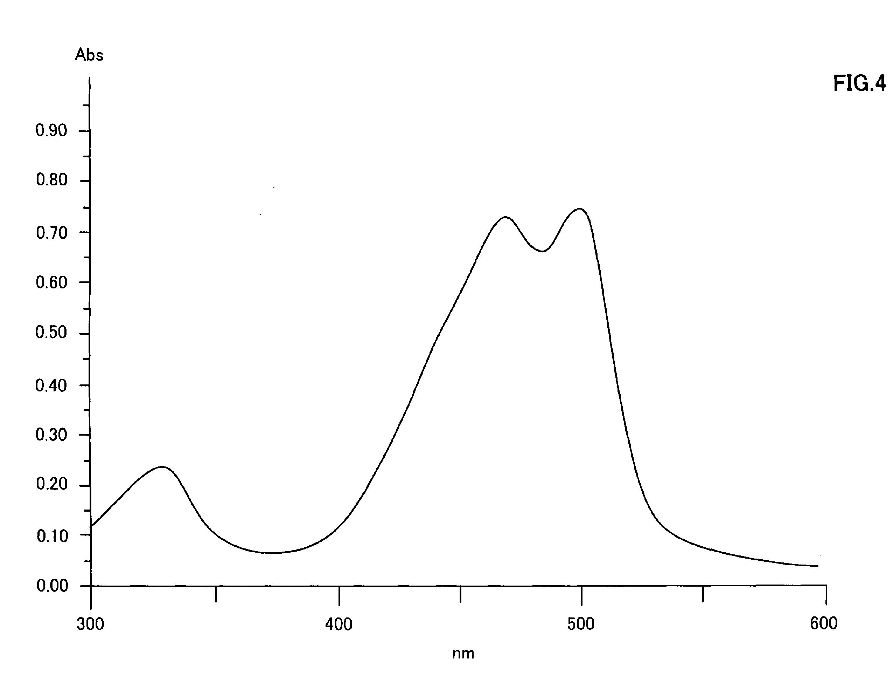

FIG. 4 shows an absorption spectrum of the coated film of metal complex compound (74). As shown in FIG. 4, metal complex compound (74) has λₘₐₓ at longer wavelength than metal complex compound (58) in Example 1, but still has an a certain level of absorption at 405 nm and is considered to be useful as a dye for the optical recording medium.

### (Example 18)

### (a) Synthetic example

Using similar reaction conditions as Example 1, n-hexylamine represented by the following structural formula [17] was used as an amine to synthesize the compound represented by the following structural formula [18].

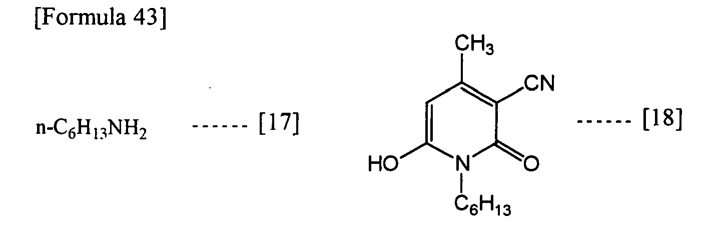

Next, 6.08 g (0.04 mol) of 3-amino-5-trifluoromethyl-1,2,4(H)-triazole represented by the following structural formula [19] was dissolved in a mixture of 15 ml of acetic acid, 5 ml of propionic acid and 4 ml of concentrated sulfuric acid and chilled to 0 °C to 5 °C. To this mixture was added 14 g of nitrosylsulfuric acid while maintaining the temperature at 10 °C or less to perform diazotization to prepare a diazotized solution.

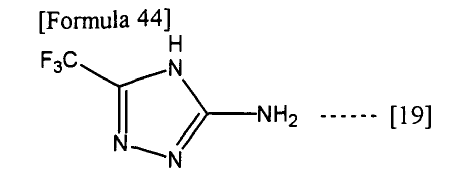

On the other hand, 10.5 g (0.045 mol) of the compound represented by the above structural formula [18], 1.5 g of urea and 15 g of sodium acetate were dissolved with stirring in 100 ml of methanol + 10 ml of water in a separate vessel and chilled to 0 °C to 5 °C. To this solution was added dropwise the above diazotized solution at 5°C or less. After completion of the dropwise addition, the reaction mixture was stirred for 30 minutes and filtered. The solids collected were suspended in 600 ml of water to remove the inorganic salts, and stirred for about 30 minutes. The precipitate collected was suspended in 200 ml of methanol, stirred and filtered to collect the solids, which were heated under vacuum to dryness to yield 7.84 g (yield: 49%) of the compound represented by the following structural formula [20]. This compound in chloroform has λₘₐₓ = 391.5 nm and the molar absorption coefficient of 3.0×10⁴.

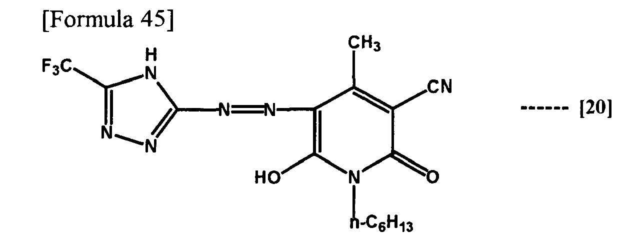

In 20 ml of N-methyl-2-pyroridone, 2 g (0.005 mol) of the compound represented by the above structural formula [20] and 1.4 g of potassium carbonate are suspended and dissolved, and the resultant mixture is heated to 90 °C. To this solution was added 2.1 g (0.015 mol) of 1-bromobutane and the resultant mixture is heated for 1 hour. The reaction mixture was then cooled and poured into water to precipitate solids, which were collected by filtration, suspended in methanol, stirred and filtered to collect solids, which were dried under vacuum to yield 1.31 g (yield: 58%) of the pyridone azo compound represented by the exemplary compound (56). This pyridone azo compound in chloroform had λₘₐₓ = 480 nm and the molar absorption coefficient of 2.7×10⁴.
The pyridone azo compound obtained and represented by the exemplary compound (56) was used to synthesize a nickel complex similarly to the method in Example 1 to yield the compound represented by the following structural formula [21] (referred to as metal complex compound (75)). This metal complex compound (75) in chloroform had λₘₐₓ = 463 nm and 491.5 nm and the molar absorption coefficient of 8.2×10⁴ and 8.0×10⁴, respectively.

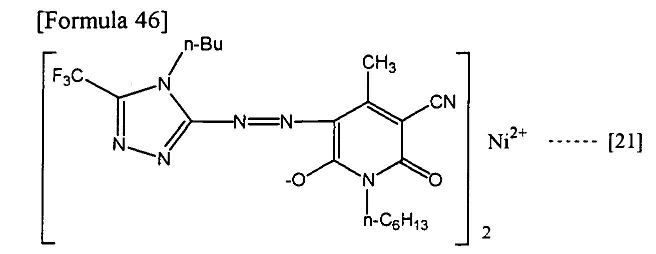

(b) Evaluation of optical recording medium
Metal complex compound (75) was dissolved in octafluoropentanol to prepare a solution with the concentration of 1 wt%. This solution was filtered to prepare a dissolved solution, which was dropped to apply by a spin coating method (500 rpm) on an injection molded polycarbonate resin substrate with a diameter of 120 mm and a thickness of 0.6 mm and then dried at 100 °C for 30 minutes. The coated film had the maximum absorption wavelength (λₘₐₓ) at 469.5, 500 nm.

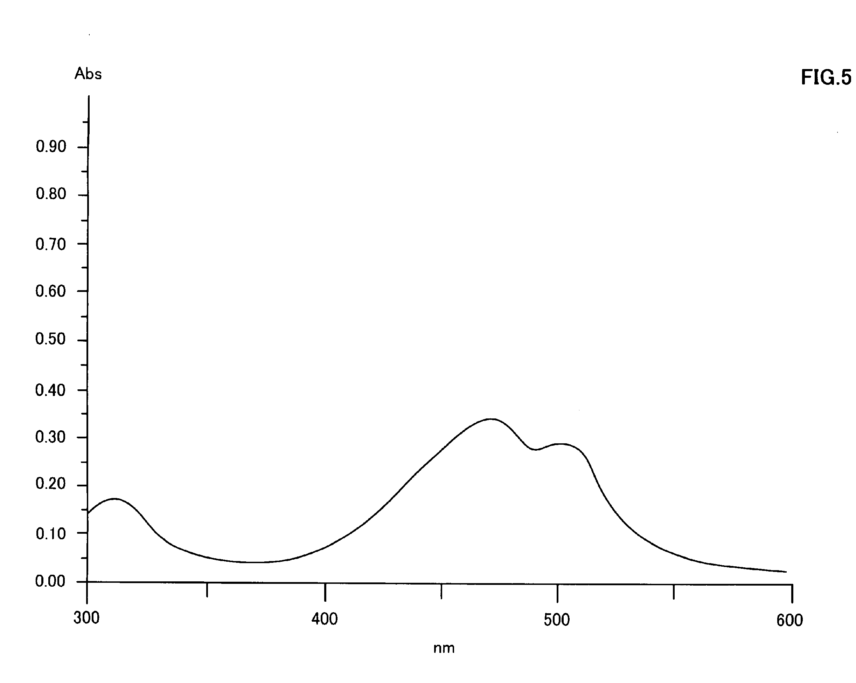

FIG. 5 shows an absorption spectrum of the coated film of metal complex compound (75). As shown in FIG. 5, metal complex compound (74) has λₘₐₓ at longer wavelength than metal complex compound (58) in Example 1, but still has a certain level of absorption at 405 nm and is considered to be useful as a dye for the optical recording medium.

Further, a reflective layer such as Ag and the like is, as needed, formed by a sputtering method on the coated film thus formed and an ultraviolet curing resin is further applied by spin coating and the like to the reflective layer and then irradiated with UV light to cure to form a protective layer, yielding the optical recording medium.
A value of λₘₐₓ of the coated film allows the optical recording medium to record and read, for example, with a semiconductor laser beam with a center wavelength of 405 nm. That is, it is found that the metal-containing pyridone azo compound composed of the divalent transition metal and the pyridone azo compound represented by the general formulas [I] to [III] is the compound with the structure effective for writing with the blue laser beam.

### (Example 19)

Using the synthetic method similar to that in Example 1, a pyridone azo compound represented by above exemplary compound (57) was used to synthesize metal complex compound (76), of which the maximum absorption wavelength (λₘₐₓ) in solution (chloroform), the molar absorption coefficient and the maximum absorption wavelength of the coated film (λₘₐₓ) (octafluoropentanol was used as a coating solvent) were measured similarly to Example 1.

The measured results of the maximum absorption wavelength (λₘₐₓ) in solution (chloroform), the molar absorption coefficient and the maximum absorption wavelength of the coated film (λₘₐₓ) (octafluoropentanol is used as a coating solvent) of the metal complex compounds prepared in Examples 1 to 19 are shown in Table 1.

**Table 1**

| Example | Metal complex compound | Organic dye compound (Exemplary compound No.) | Coordination metal (metal salt used) | λₘₐₓ (nm) in solution (in CHCl₃) | Molar absorption coefficient (× 10000) | λₘₐₓ of coated film (nm) | Light stability I/I₀ |
|---|---|---|---|---|---|---|---|
| 1 | (58) | I(41) | Ni | 436 | 5.5 | 442.5 | 63.2% |
| | | | Ni(CH₃COO)₂4H₂O | | | | |
| 2 | (59) | I(42) | Ni | 425 | 4 | 436.5 | 59.0% |
| | | | Ni(CH₃COO)₂4H₂O | | | | |
| 3 | (60) | I(43) | Ni | 435.5 | 5 | 444 | 62.2% |
| | | | Ni(CH₃COO)₂4H₂O | | | | |
| 4 | (61) | I(44) | Ni | 438.5 | 5.4 | 442.5 | 79.3% |
| | | | Ni(CH₃COO)₂4H₂O | | | | |
| 5 | (62) | I(45) | Ni | 436 | 7.4 | 441 | 62.6% |
| | | | Ni(CH₃COO)₂4H₂O | | | | |
| 6 | (63) | I(45) | Co | 445 | 3.9 | 448 | |
| | | | Co(CH₃COO)₂4H₂O | | | | |
| 7 | (64) | I(46) | Ni | 461.5 | 6.2 | 460 | |
| | | | Ni(CH₃COO)₂4H₂O | | | | |
| 8 | (65) | I(47) | Ni | 439 | 5.1 | 442.5 | |
| | | | Ni(CH₃COO)₂4H₂O | | | | |
| 9 | (66) | II(48) | Ni | 459, | 6.3,6.1 | 462, | |
| | | | Ni(CH₃COO)₂4H₂O | 486.5 | | 494.5 | |
| 10 | (67) | II(48) | Co | 462.5 | 5.1 | 465 | |
| | | | Co(CH₃COO)₂4H₂O | | | | |
| 11 | (68) | II(49) | Ni | 463 | 8.2 | 470.5 | 98.5% |
| | | | Ni(CH₃COO)₂4H₂O | | | | |
| 12 | (69) | I(50) | Ni | 435.5 | 5.4 | 442 | 63.2% |
| | | | Ni(CH₃COO)₂4H₂O | | | | |
| 13 | (70) | I(51) | Ni | 435 | 5.1 | 445 | 55.5% |
| | | | Ni(CH₃COO)₂4H₂O | | | | |
| 14 | (71) | I(52) | Ni | 437 | 4.7 | 440.5 | |
| | | | Ni(CH₃COO)₂4H₂O | | | | |
| 15 | (72) | I(53) | Ni | 447 | 2.8 | 453.5 | |
| | | | Ni(CH₃COO)₂4H₂O | | | | |
| 16 | (73) | I(54) | Ni | 436 | 4.5 | 442 | |
| | | | Ni(CH₃COO)₂4H₂O | | | | |
| 17 | (74) | III(55) | Ni | 466, | 8.5,8.5 | 469.5, | 89.0% |
| | | | Ni(CH₃COO)₂4H₂O | 492 | | 500 | |
| 18 | (75) | II(56) | Ni | 463, | 8.2, 8.0 | 470.5, | 98.5% |
| | | | Ni(CH₃COO)₂4H₂O | 491.5 | | 504 | |
| 19 | (76) | I(57) | Ni | 438.5 | 4.6 | 435 | 51.5% |
| | | | Ni(CH₃COO)₂4H₂O | | | | |
| 20 | (77) | I(57) | Co | 452 | 4.5 | 436 | 69.3% |
| | | | Co(CH₃COO)₂4H₂O | | | | |
| 21 | (78) | I(58) | Ni | 431.5 | 4.5 | 444 | 74.2% |
| | | | Ni(CH₃COO)₂4H₂O | | | | |
| 22 | (79) | I(58) | Cu | 400 | 3.6 | 407 | 50.5% |
| | | | CuCl₂ | | | | |
| | | | 2H₂O | | | | |
| 23 | (80) | I(59) | Ni | 431.5 | 3 | 434.5 | 19.0% |
| | | | Ni(CH₃COO)₂4H₂O | | | | |
| 24 | (81) | II(60) | Ni | 450.5 | 5.8 | 466.5 | 88.1% |
| | | | Ni(CH₃COO)₂4H₂O | | | | |
| 25 | (82) | III(61) | Ni | 465 | 6.8 | 473.5 | 67.5% |
| | | | Ni(CH₃COO)₂4H₂O | | | | |
| 26 | (83) | III(62) | Ni | 425 | 3.9 | 446.5 | 14.5% |
| | | | Ni(CH₃COO)₂4H₂O | | | | |
| 27 | (84) | III(63) | Ni | 435 | 4.6 | 454 | 42.3% |
| | | | Ni(CH₃COO)₂4H₂O | | | | |

### (Comparative example 1)

Compound [13] given below was synthesized for comparison and evaluated as an optical recording medium.
(a) Manufacturing Example
Diazotization of 2-amino-6-methylbenzothiazole (from Tokyo Chemical Industry Co., Ltd.) represented by the following structural formula (referred to as compound [11] hereinafter) was performed using a similar method and coupled under similar condition as example 1 to synthesize compound [12], which had λₘₐₓ at 453.5 nm and the molar absorption coefficient of 3.2×10⁴ in chloroform.
Compound [12] was then metallized with nickel acetate to form a metal-containing pyridone azo compound represented by the following structural formula [13], of which a chloroform solution had λₘₐₓ at 524 nm and the molar absorption coefficient of 7.4×10⁴.

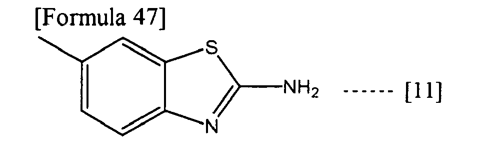

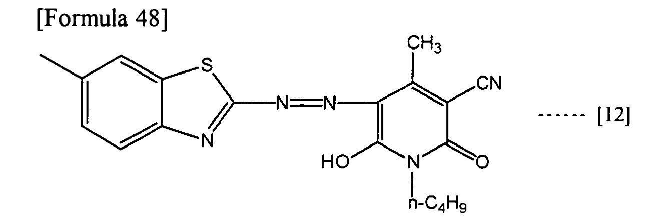

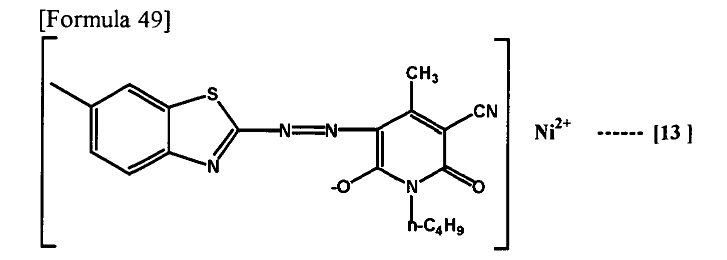

(b) Example of optical recording medium
The metal-containing pyridone azo compound represented by the above structural formula (13) was tried to dissolve in octafluoropentanol to prepare a solution with the concentration of 1 (one) wt%, but its solubility was low to leave a half of it to be insoluble. The mixture was filtered to form a dissolved solution, which was dropped to apply by a spin coating method (500 rpm) on an injection molded polycarbonate resin substrate with a diameter of 120 mm and a thickness of 0.6 mm and then dried at 100 °C for 30 minutes. The coated film had the maximum absorption wavelength (λₘₐₓ) at 542.5 nm. It has little absorption at wavelength of 405 nm and it shows it hardly enables the writing with the laser beam with center wavelength of 405 nm.

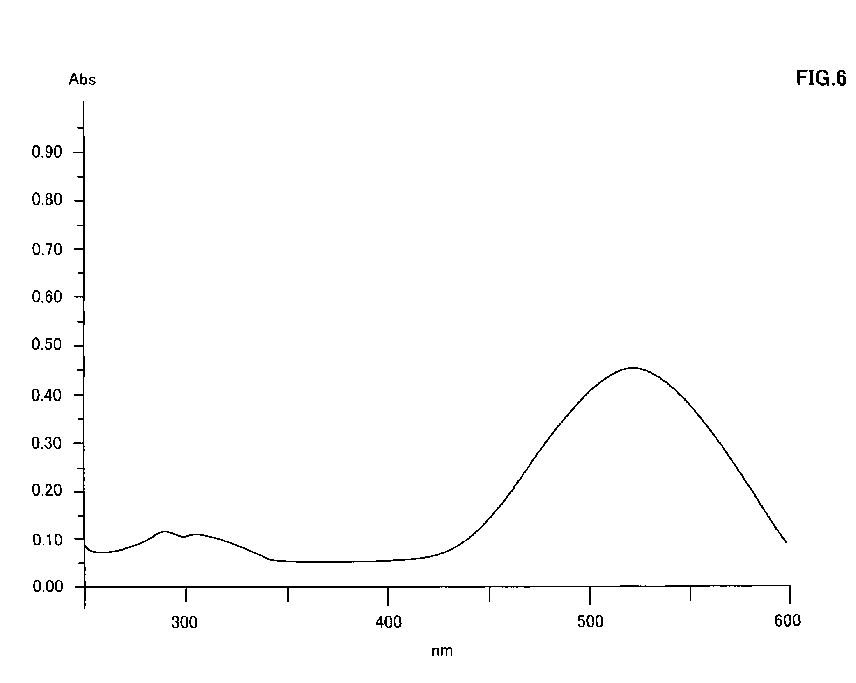

FIG. 6 represented by the structural formula [13] shows an absorption spectrum of the coated film of metal-containing pyridone azo compound. It is found from the results in Figure 6 that the metal-containing pyridone azo compound represented by structural formula [13] is a metal-containing pyridone azo compound, but an insufficient dye for the writing with the blue laser beam unless isoxazole, 1,2,4-triazole or pyrazole is not chosen as a diazo component.

### (Comparative example 2)

The metal-containing pyridone azo compound represented by structural formula [15] was synthesized for comparison and evaluated for an optical recording medium.
(a) Manufacturing example
Diazotization of 2-amino-5-methyl-1,3,4-thiadiazole (manufactured by Tokyo Chemical Industry Co., Ltd.) was performed using a similar method and coupled under similar condition as example 1 to synthesize following compound [14], which had λₘₐₓ at 409.5 nm and the molar absorption coefficient of 3.0×10⁴ in chloroform.

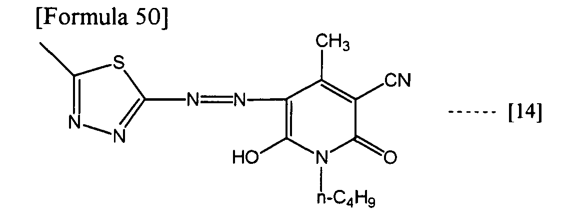

Compound (14) was similarly metallized with nickel acetate to form the metal-containing pyridone azo compound represented by structural formula [15], of which a chloroform solution had λₘₐₓ at 494 nm and the molar absorption coefficient of 7.1×10⁴.

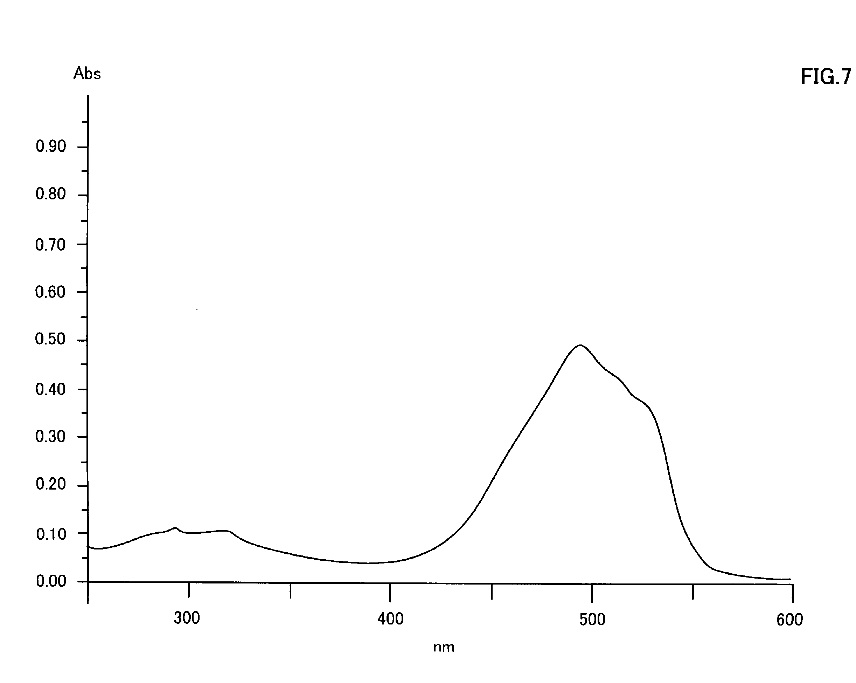

FIG. 7 represented by the structural formula [15] shows an absorption spectrum of metal-containing pyridone azo compound. It is found from the results shown in Figure 7 that the metal-containing pyridone azo compound represented by structural formula [15] has an absorption near 405 nm as an absorption tail and littler writing feature is anticipated.

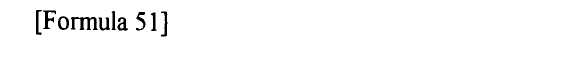

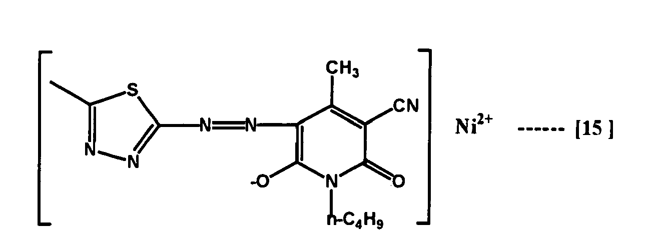

(b) Example of optical recording medium
The metal-containing pyridone azo compound represented by structural formula [15] was tried to dissolve in octafluoropentanol to prepare a solution with the concentration of 1 (one) wt%, but its solubility was too low to be dissolved. The mixture was filtered to give a dissolved solution, which was dropped to apply by a spin coating method (500 rpm) on an injection molded polycarbonate resin substrate with a diameter of 120 mm and a thickness of 0.6 mm and then dried at 100 °C for 30 minutes. However, an absorption spectrum of the coated film was not obtained because of the poor solubility.

### (Comparative example 3)

The metal-containing azo complex compound represented by the following structural formula [16] was synthesized for comparison and evaluated as an optical recording medium.
(a) Manufacturing example
As referring to above Patent Document 2 (JP-A 09-277703), the compound represented by the following structural formula [16] synthesized using m-N, N-diethylaniline as a raw material in chloroform had two peaks at λₘₐₓ of 552.5 nm and 516 nm with the molar absorption coefficient of 1.1×10⁵ and 8.6×10⁴, respectively.

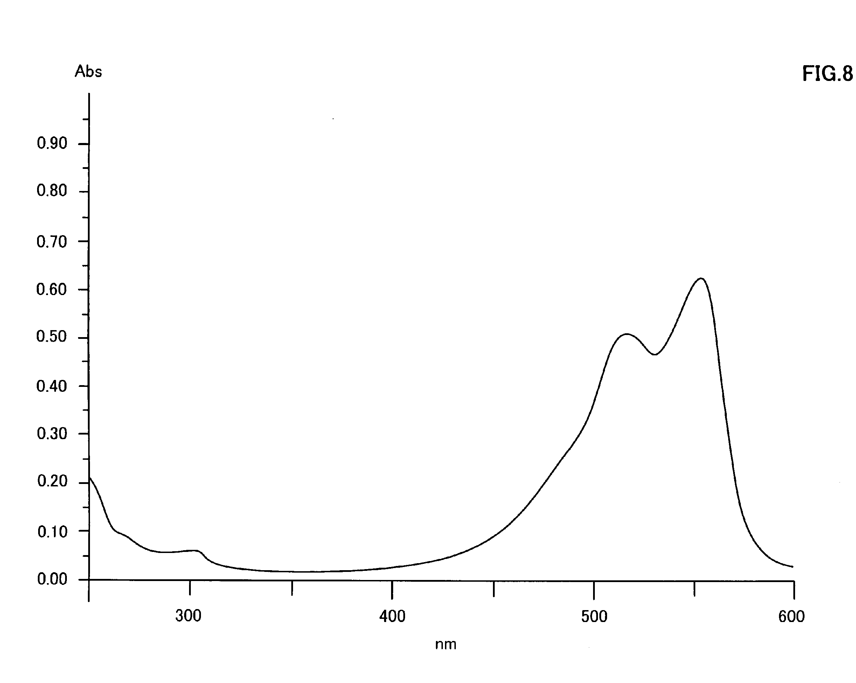

FIG. 8 represented by the structural formula [16] shows an absorption spectrum of metal-containing azo compound in chloroform.

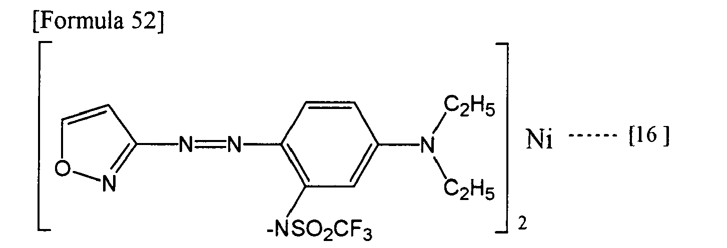

(b) Example of optical recording medium
Metal-containing azo compound represented by the above structural formula [16]was dissolved in octafluoropentanol to prepare a solution with the concentration of 1 wt%. This solution was filtered to prepare a dissolved solution, which was dropped to apply by a spin coating method (500 rpm) on an injection molded polycarbonate resin substrate with a diameter of 120 mm and a thickness of 1.2 mm and then dried at 100 °C for 30 minutes. The coated film had the maximum absorption wavelength (λₘₐₓ) at 565.5 nm, 524.5nm.
It is found that an absorption spectrum of the metal-containing azo complex compound represented by structural formula [16] has little absorption near wavelength of 405 nm even if it contains isoxazole as a diazo component.
These results indicate that the metal-containing azo complex compound represented by structural formula [16] is an unsatisfactory dye compound for the writing with the blue laser beam, even if the metal-containing azo complex compound contains isoxazole as a diazo component but not a pyridone structure as a coupling component.

### (Examples 20 to 27)

Using a method similar to the synthetic method in Example 1, pyridone azo compounds represented by exemplary compound (57) and the following exemplary compound (58) to exemplary compound (63) were used to synthesize metal complex compounds (77) to (84), of which the maximum absorption wavelength (λₘₐₓ) in solution (chloroform), the molar absorption coefficients and the maximum absorption wavelength (λₘₐₓ) of the coated film (octafluoropentanol was used as a coating solvent) are measured. The measured results are shown in Table 1.
Considering that, in writing and reading in a short wavelength region described in the present invention, the value of light stability, that is, dye retention (I/I₀ in Table 1, (%)) of any conventionally known organic dyes for short wavelength writing and reading is less than 10%, it can be said that the value of light stability, that is, the above dye retention is 60% or higher is regarded as extremely good.
Metal complex compounds described in Table 1 are extremely good from such evaluation criteria. Among them, Examples 23, 26 and 27 are better in light stability than conventionally known dyes and the compounds with sufficiently practicable light stability. If more critically asked, they are likely to be slightly worse than other metal complex compounds listed in Table 1.
That is, comparison of Example 23 (light stability, 19.0%) with Example 1 (light stability, 63.2%) suggests the presence of an unsubstituted amino group (-NH₂) in R₁ of the general formula [I] is not so good as described previously. However, Example 23 is still in sufficiently good level as compared with conventional compounds and combination with substituents R₂ to R₅ can increase solubility and improve light stability.
Also, as found in a comparison of Example 26 (light stability, 14.5%) and Example 27 (light stability, 42.3%) with Example 25 (light stability, 67.5%), presence of a hydrogen atom as R₁₀ in the general formula [III] suggests deterioration of light stability. Further, comparison between Example 26 (light stability, 14.5%) and Example 27 (light stability, 42.3%), and comparison between Example 25 (light stability, 67.5%) and Example 17 (light stability, 89%) indicate that a combination of a hydrogen atom in R₁ and a carboxylate ester in R₃ in the general formula [III] is likely to deteriorate light stability. A copper complex (Example 22) is found to be a slightly worse than the other metal complex compounds in Table 1, but is still much better compound than conventionally known organic dyes at any rate for the shorter wavelength blue laser.

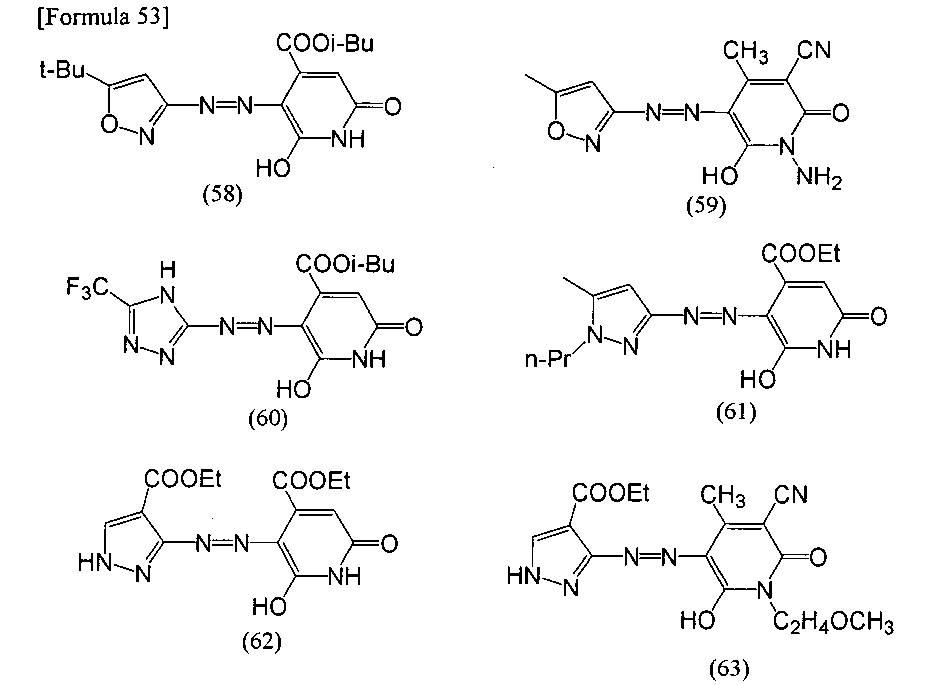

The present application is based on Japanese Application (Patent Application 2005-95905) filed on March 29, 2005 and its entirety is supplemented by reference.

### Brief Description of the Drawings

FIGs. 1(a) and 1(b) are figures explaining optical recording medium which this exemplary embodiment is applied to, where FIG. 1(a) is a figure for first exemplary embodiment, and FIG. 1(b) is a figure for second exemplary embodiment;
FIG. 2 is an absorption spectrum of the coated film of metal complex compound (58) (Example1);
FIG. 3 is an absorption spectrum of the coated film of metal complex compound (59) (Example2);
FIG. 4 is an absorption spectrum of the coated film of metal complex compound (74) (Example 17);
FIG. 5 is an absorption spectrum of the coated film of metal complex compound (75) (Example 18);
FIG. 6 is an absorption spectrum of the coated film of metal-containing pyridone azo compound (Comparative example 1) represented by the structural formula [13];
FIG. 7 is an absorption spectrum of metal-containing pyridone azo compound in chloroform (Comparative example 2) represented by the structural formula [15]; and
FIG. 8 is an absorption spectrum of metal-containing azo compound in chloroform (Comparative example 3) represented by the structural formula [16].

### Description of Reference Numerals and Signs

1: substrate
2: recording layer
3: reflective layer
4: protective layer
5: protective film
10, 20: optical recording medium

## Claims

1. An optical recording medium comprising:
a substrate; and
a recording layer disposed directly or through other layer on the substrate and capable of at least any one of writing and reading information by irradiation with a laser beam of a wavelength of 350 nm or longer and 530 nm or shorter,
the recording layer including a metal complex compound composed of: an organic dye compound having a coupling component and any one kind of diazo component selected from isoxazole, triazole and pyrazole, the coupling component consisting of a 6-hydroxy-2-pyridone structureand
a metal ion coordinated with the organic dye compound.

2. The optical recording medium according to claim 1, wherein the organic dye compound is a pyridone azo compound represented by the general formulas [I] to [III] below: 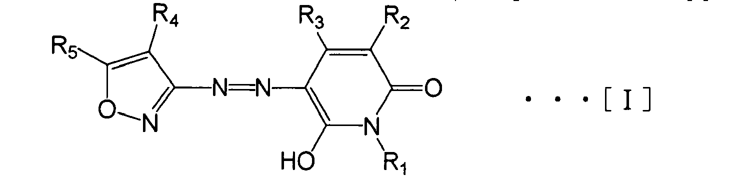 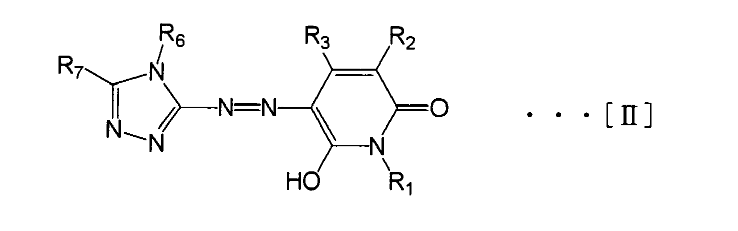 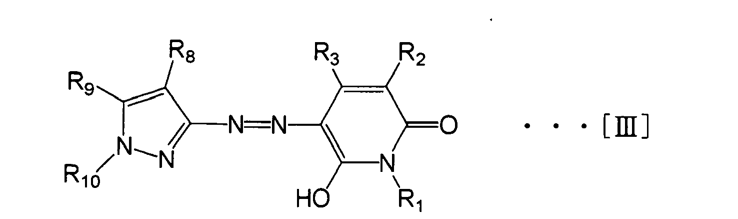 (In the general formulas [I] to [III], R₁ to R₁₀ each is independently a hydrogen atom or monovalent functional group.)

3. The optical recording medium according to claim 2,
wherein in the R₁ to R₁₀ in the general formulas [I] to [III],
R₁ represents any one kind selected from a hydrogen atom, linear or branched alkyl group, cycloalkyl group, hydroxyl group, linear or branched alkoxy group, saturated or unsaturated heterocyclic group, aryl group, aralkyl group, acyl group, amino group and acylamino group,
R₂ to R₅ and R₇ to R₉ represent any one kind selected from a hydrogen atom, linear or branched C1-C18 alkyl group, C3-C 18 cycloalkyl group, linear or branched C2-C 18 alkenyl group, saturated or unsaturated heterocyclic group, C6-C18 aryl group, C7-C20 aralkyl group, linear or branched C1-C18 alkoxy group, linear or branched C1-C18 alkylthio group, a halogen atom, nitro group, cyano group, mercapto group, hydroxyl group, formyl group, acyl group, amino group, acylamino group, carbamate group, carboxylate ester group, acyloxy group, carbamoyl group, sulfonyl group, sulfinyl group, sulfamoyl group, sulfonate ester group and sulfonamide group, and
R₆ and R₁₀ represent any one kind selected from a hydrogen atom, linear or branched alkyl group, cycloalkyl group and acyl group.

4. The optical recording medium according to claim 1, wherein the metal ion is a divalent ion of metal selected from group 3 to group 12 in the periodic table.

5. The optical recording medium according to claim 1, wherein the metal ion is an ion of at least one kind of metal selected from nickel, cobalt, iron, zinc, copper and manganese.

6. The optical recording medium according to claim 1, wherein the light is a laser beam with a wavelength of 385 nm to 410 nm.

7. An optical recording medium comprising a recording layer containing an organic dye,
wherein the organic dye including a metal complex compound consisting of a pyridone azo compound represented by the following general formulas [I] to [III] and a divalent ion of metal coordinated with the pyridone azo compound and selected from group 3 to group 12 in the periodic table. 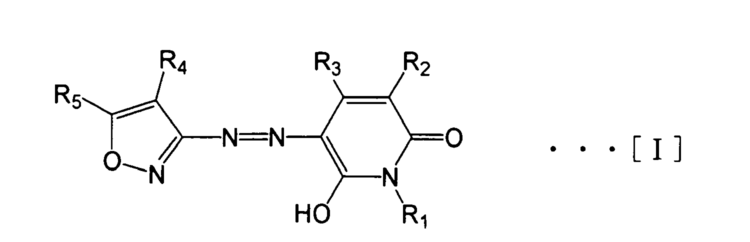 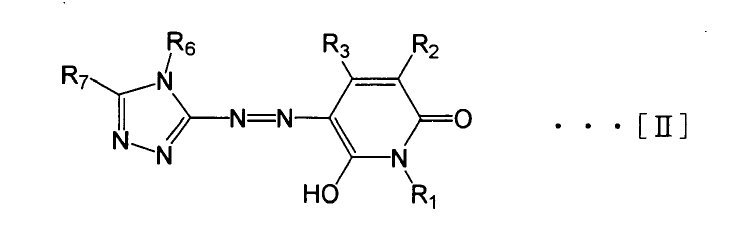 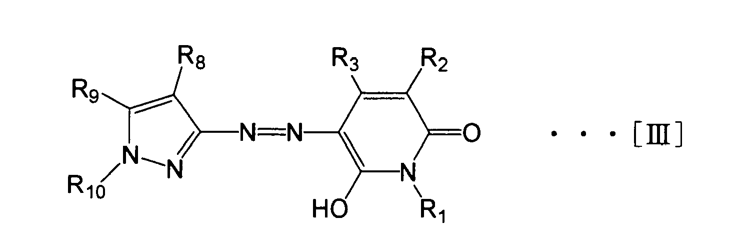 (In the general formulas [I] to [III], R₁ to R₁₀ each is independently a hydrogen atom or monovalent functional group.)

8. The optical recording medium according to claim 1 or claim 7, wherein the pyridone azo compound has a molecular weight of 1,000 or less.

9. A metal complex compound comprising:
a divalent ion of metal selected from group 3 to group 12 in the periodic table: and
a pyridone azo compound coordinated with the ion of metal and represented by the following general formula [I]. 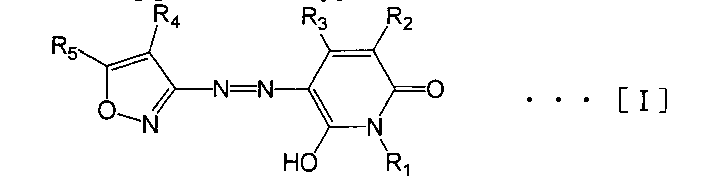 (In the general formula [I], R₁ to R₅ each is independently a hydrogen atom or monovalent functional group.)

10. The metal complex compound according to claim 9, wherein the metal is at least one kind selected from nickel, cobalt, iron, zinc, copper and manganese.

11. An organic dye compound comprising a metal complex compound consisting of a divalent ion of metal and a pyridone azo compound,
wherein the pyridone azo compound contains a coupling component consisting of a 6-hydroxy-2-pyridone structure and a diazo component consisting of isoxazole.

12. The organic dye compound according to claim 11, wherein the ion of metal is an ion of metal selected from group 3 to group 12 in the periodic table.

13. The optical recording medium according to claim 1 or claim 7, wherein the organic dye compound is a pyridone azo compound represented by the following general formula [I]. 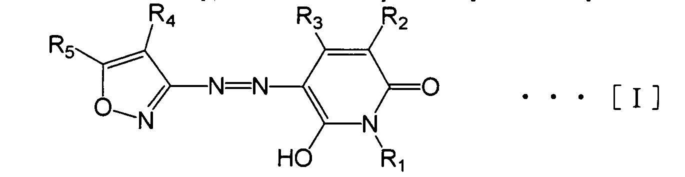 (In the general formula [I], R₁ is a monovalent functional group except an unsubstituted amino group (-NH₂), and R₂ to R₅ each is independently a hydrogen atom or monovalent functional group.)

14. The optical recording medium according to claim 1 or claim 7, wherein the organic dye compound is a pyridone azo compound represented by the following general formula (IV). 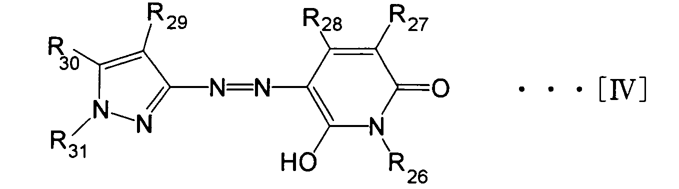 (In the general formula (IV), R₃₁ is a monovalent functional group except a hydrogen atom, and R₂₆ to R₃₀ each is independently a hydrogen atom or monovalent functional group.)
